# EUROPEAN PATENT APPLICATION

(11) **EP 4 782 239 A1**
(43) Date of publication of application: **29.07.2026**
(21) Application number: 26154024.9
(22) Date of filing: 26.01.2026
(51) Int. Cl.: B60K 1/00, B60K 17/04, B60K 7/00

(54) **POWERTRAIN AND ELECTRIC VEHICLE**

(30) Priority: 27.01.2025 CN 202510127726
(71) Applicant: Huawei Technologies Co., Ltd., Shenzhen, Guangdong 518129 (CN)
(72) Inventor: Dang, Xuebin, Shenzhen, 518129 (CN); Hong, Jian, Shenzhen, 518129 (CN)
(74) Representative: Gill Jennings & Every LLP

(57) **Abstract**

This application provides a powertrain and an electric vehicle. A motor housing of the powertrain is configured to: fasten a stator of a drive motor and accommodate a rotor and a motor shaft that are of the drive motor. The rotor is fastened to the motor shaft. A reducer housing of the powertrain is configured to enclose an opening of the motor housing. An inner cavity of the reducer housing is configured to accommodate one planetary gear set of a planetary reducer. The reducer housing includes a through hole. The through hole is configured to connect the inner cavity of the reducer housing and an inner cavity of the motor housing. One end of the motor shaft extends into the inner cavity of the reducer housing from the through hole in an axial direction of the powertrain. The one end of the motor shaft is configured to serve as a sun gear of the one planetary gear set. In this way, the rotor of the drive motor can directly transmit power to a planet gear of the one planetary gear set of the planetary reducer through the one end of the motor shaft, so that a transmission process between the drive motor and the planetary reducer is more stable, and a bending resistance capability of the motor shaft is further improved. This increases a critical rotation speed of the rotor of the drive motor.

## Description

### TECHNICAL FIELD

This application relates to the field of electric vehicle technologies, and in particular, to a powertrain and an electric vehicle.

### BACKGROUND

In a powertrain, transmission between a drive motor and a reducer is mainly implemented through a motor shaft of the drive motor and an input shaft of the reducer. The motor shaft and the input shaft of the reducer are usually designed in a split manner, and are connected to each other through a spline during assembly to transmit torque. As a result, the motor shaft is unstable in a power transmission process, and a critical rotation speed of a rotor of the drive motor is limited.

### SUMMARY

This application provides a powertrain and an electric vehicle, to increase a critical rotation speed of a rotor of a drive motor.

According to a first aspect, this application provides a powertrain. A motor housing of the powertrain is configured to: fasten a stator of a drive motor and accommodate a rotor and a motor shaft that are of the drive motor. The rotor is fastened to the motor shaft. A reducer housing of the powertrain is configured to enclose an opening of the motor housing. An inner cavity of the reducer housing is configured to accommodate one planetary gear set of a planetary reducer. The reducer housing includes a through hole. The through hole is configured to connect the inner cavity of the reducer housing and an inner cavity of the motor housing. One end of the motor shaft extends into the inner cavity of the reducer housing from the through hole in an axial direction of the powertrain. The one end of the motor shaft is configured to serve as a sun gear of the one planetary gear set.

In this embodiment of this application, the one end of the motor shaft extends into the inner cavity of the reducer housing from the through hole in the axial direction of the powertrain, and the one end of the motor shaft is configured to serve as the sun gear of the one planetary gear set. In this way, the rotor of the drive motor can directly transmit power to a planet gear of the one planetary gear set of the planetary reducer through the one end of the motor shaft, so that a degree of integration between the drive motor and the planetary reducer is higher, and a transmission process between the drive motor and the planetary reducer is more stable. This helps improve reliability of the powertrain. In comparison with that the sun gear of the one planetary gear set is in a transmission connection to the motor shaft through a spline, in a case in which the one end of the motor shaft serves as the sun gear of the one planetary gear set to directly receive power of the rotor of the drive motor, the motor shaft of the drive motor and an input shaft of the planetary reducer are integrated into one. This helps improve a bending resistance capability of the motor shaft, improve power transmission stability, and further increase a critical rotation speed of the rotor of the drive motor.

In an embodiment, an outer circumferential surface of the one end of the motor shaft includes a plurality of teeth. The plurality of teeth are configured to: engage with and drive planet gears of the one planetary gear set.

In this embodiment of this application, the outer circumferential surface of the one end of the motor shaft includes the plurality of teeth, so that the one end of the motor shaft may form the sun gear of the one planetary gear set. The plurality of teeth are configured to: engage with and drive the planet gears of the one planetary gear set, so that the one end of the motor shaft can be directly in a transmission connection to the planetary reducer, and no additional spline is required for transmission between the drive motor and the planetary reducer. In this way, the planetary reducer may directly receive power of the motor shaft. This facilitates a more stable transmission process, and further helps increase the critical rotation speed of the rotor. The sun gear is formed by using the one end of the motor shaft, so that the degree of integration of a transmission structure between the drive motor and the planetary reducer is higher, enhancing stability of the powertrain.

In an embodiment, an outer diameter of the sun gear of the motor shaft is less than an outer diameter of a part that is of the motor shaft and that is configured to fasten the rotor.

In this embodiment of this application, if the rotor of the drive motor is heavy, the outer diameter of the part that is of the motor shaft and that is configured to fasten the rotor is set to be large, so that the motor bearing carries the heavy rotor. If the planet gear of the one planetary gear set is light, the outer diameter of the sun gear of the motor shaft is set to be small, so that the planet gear of the one planetary gear set may be carried. In this way, overall carrying force of the motor shaft is more balanced and stable.

In this embodiment of this application, the outer diameter of the sun gear of the motor shaft is small, so that it is convenient for the one end of the motor shaft on which the sun gear is located to extend into the inner cavity of the reducer housing from the through hole of the reducer housing. The outer diameter of the sun gear of the motor shaft is less than the outer diameter of the part that is of the motor shaft and that is configured to fasten the rotor, so that the part that is of the motor shaft and that is configured to fasten the rotor cannot penetrate the through hole of the reducer housing, and the motor shaft can be axially limited through the reducer housing. This helps reduce axial fluttering of the motor shaft, makes transmission of the motor shaft more stable, and helps increase the critical rotation speed of the motor rotor.

In this embodiment of this application, the outer diameter of the sun gear of the motor shaft is smaller, and the one planetary gear set of the planetary reducer is also smaller. This helps arrange the one planetary gear set close to the rotor of the drive motor in the motor housing. In this way, the one planetary gear set is arranged in the motor housing, and space of the motor housing is fully utilized, so that an axial size of the powertrain is small, and miniaturization of the powertrain is facilitated.

In an embodiment, the reducer housing further includes a motor shaft bearing groove. The motor shaft bearing groove is configured to accommodate a bearing of the motor shaft. A groove opening of the motor shaft bearing groove faces the rotor in the axial direction of the powertrain. An end winding of the stator is located in the inner cavity of the motor housing. The end winding surrounds an outer circumference of the motor shaft bearing groove. The through hole penetrates a groove bottom of the motor shaft bearing groove in the axial direction of the powertrain. The one end of the motor shaft penetrates the through hole from the motor shaft bearing groove, and extends into the inner cavity of the reducer housing.

In this embodiment of this application, the end winding of the stator is located in the inner cavity of the motor housing, and the end winding surrounds the outer circumference of the motor shaft bearing groove, so that the motor shaft bearing groove can be disposed in axial space of the powertrain through the end winding, and the bearing of the motor shaft in the motor shaft bearing groove can also be disposed on an inner side of the end winding. In this way, the motor shaft bearing groove and the bearing of the motor shaft are disposed more compactly with the rotor. This helps shorten the axial size of the motor shaft, and further helps reduce the axial size of the powertrain.

In this embodiment of this application, the through hole penetrates the groove bottom of the motor shaft bearing groove in the axial direction of the powertrain, the one end of the motor shaft penetrates the through hole from the motor shaft bearing groove, and extends into the inner cavity of the reducer housing, and the motor shaft extends into the reducer housing from the groove bottom of the motor shaft bearing groove located on the inner side of the end winding. In this way, the bearing supporting the integrated motor shaft may be close to the rotor. This helps shorten the axial size of the motor shaft, makes power transmission from the rotor to the sun gear of the one planetary gear set more stable, and helps increase the critical rotation speed of the rotor.

In an embodiment, a spacing between an end part of the one end of the motor shaft and the bearing is less than a spacing between an end part of the other end of the motor shaft and the bearing.

In this embodiment of this application, the spacing between the end part of the one end of the motor shaft and the bearing is smaller, so that a spacing between the sun gear of the one planetary gear set and the bearing is smaller. This helps the motor shaft transmit power of the rotor of the drive motor to the sun gear of the one planetary gear set more stably, and helps increase the critical rotation speed of the rotor. The smaller spacing between the end part of the one end of the motor shaft and the bearing helps shorten a length of the motor shaft, so that rigidity of the motor shaft is improved, and the critical rotation speed of the rotor is increased. The spacing between the end part of the other end of the motor shaft and the bearing is greater so that the motor shaft has sufficient space to fasten the rotor.

In an embodiment, a groove wall of the motor shaft bearing groove is configured to fasten a bearing clamping plate. The bearing clamping plate is located between the reducer housing and the rotor in the axial direction of the powertrain. The end winding of the stator surrounds an outer circumference of the bearing clamping plate. The bearing clamping plate is configured to clamp an outer ring of the bearing. The bearing clamping plate and an inner ring of the bearing are spaced from each other.

In this embodiment of this application, the groove wall of the motor shaft bearing groove is configured to fasten the bearing clamping plate, the end winding surrounds the outer circumference of the motor shaft bearing groove, the bearing clamping plate is located between the reducer housing and the rotor in the axial direction of the powertrain, and the end winding of the stator surrounds the outer circumference of the bearing clamping plate. In this way, the bearing clamping plate is arranged without additionally occupying space, in a direction other than the axial direction of the powertrain, of the end winding, and space inside the end winding is further fully utilized. This helps shorten the axial size of the powertrain.

In this embodiment of this application, the bearing clamping plate is configured to clamp the outer ring of the bearing, and the bearing clamping plate and the inner ring of the bearing are spaced from each other, so that the bearing clamping plate and the reducer housing can axially limit the bearing. In this way, axial fluttering of the bearing is reduced, and contact rigidity of the bearing may be further improved, so that stability between the motor shaft and the reducer housing is improved, and power transmission stability is improved. This helps increase the critical rotation speed of the rotor.

In an embodiment, the bearing clamping plate may further be served as a sensor bracket, and is configured to fasten a resolver sensor.

In an embodiment, the bearing clamping plate and the inner ring of the bearing are spaced from each other, so that the stator of the resolver sensor may be disposed in a spaced gap. In this way, space inside the end winding is fully utilized.

In an embodiment, a part of the reducer housing is recessed toward the inner cavity of the motor housing to form a groove on a side that is of the part of the reducer housing and that is away from the drive motor. The groove is configured to accommodate the planet gear and the sun gear of the one planetary gear set.

In this embodiment of this application, the part of the reducer housing is recessed toward the inner cavity of the motor housing to form the groove on the side that is of the part of the reducer housing and that is away from the drive motor, so that the groove formed by the part of the reducer housing may be provided in the motor housing. The groove is configured to accommodate the planet gear and the sun gear of the one planetary gear set, so that the planet gear and the sun gear of the one planetary gear set may be arranged to fully use axial space of the inner cavity of the motor housing. In this way, the planet gear and the sun gear of the one planetary gear set are closer to the rotor. This helps shorten the axial size of the motor shaft, makes transmission of the motor shaft more stable, and helps increase the critical rotation speed of the rotor.

In an embodiment, the one planetary gear set includes a plurality of planet gears. The plurality of planet gears are configured to engage with the sun gear. The plurality of planet gears are evenly distributed on a circumferential side of the one end of the motor shaft in a circumferential direction of the motor shaft.

In this embodiment of this application, the plurality of planet gears are configured to engage with the sun gear, and the plurality of planet gears are evenly distributed on the circumferential side of the one end of the motor shaft in the circumferential direction of the motor shaft, so that radial contact rigidity of the motor shaft is even, and force applied to the sun gear on the motor shaft is even. This further helps make force applied to the bearing of the motor shaft even, helps improve a bending resistance capability of the motor shaft, and further helps increase the critical rotation speed of the rotor.

In an embodiment, the motor shaft includes a motor shaft oil hole. The motor shaft oil hole is configured to communicate with an internal oil channel of the motor shaft to receive oil. The motor shaft oil hole is distributed on an outer circumferential surface of the motor shaft. The motor shaft oil hole is exposed to the inner cavity of the reducer housing.

In this embodiment of this application, the motor shaft oil hole is configured to communicate with the internal oil channel of the motor shaft to receive the oil, the motor shaft oil hole is distributed on the outer circumferential surface of the motor shaft, and the motor shaft oil hole is exposed to the inner cavity of the reducer housing. In this way, the motor shaft oil hole can spray the oil in the internal oil channel of the motor shaft into the inner cavity of the reducer housing, to lubricate the sun gear and the planet gear of the one planetary gear set. This helps ensure normal operation of the one planetary reducer.

In an embodiment, the motor shaft oil hole is located between the sun gear and the bearing of the motor shaft in the axial direction of the powertrain. In this way, the oil sprayed from the motor shaft oil hole can not only lubricate the sun gear of the one planetary gear set, but also lubricate the bearing of the motor shaft. This helps improve lubrication efficiency of the powertrain.

In an embodiment, a planetary shaft of the one planetary gear set includes an axial hole and a radial hole. The axial hole is distributed on an axial end face of the planetary shaft of the one planetary gear set. The radial hole is distributed on an outer circumferential surface of the planetary shaft of the one planetary gear set. The axial hole is configured to receive oil output from the motor shaft oil hole. The radial hole is configured to communicate with the axial hole to convey oil to a bearing between the planetary shaft and the planet gear of the one planetary gear set for lubrication.

In this embodiment of this application, the axial hole is distributed on the axial end face of the planetary shaft of the one planetary gear set. In this way, it is convenient for the axial hole to receive the oil output from the motor shaft oil hole and input the oil into the planetary shaft of the one planetary gear set. The radial hole is distributed on the outer circumferential surface of the planetary shaft of the one planetary gear set, so that it is convenient for the radial hole to convey the oil to the bearing between the planetary shaft and the planet gear of the one planetary gear set for lubrication.

In this embodiment of this application, the axial hole is configured to receive the oil output from the motor shaft oil hole, and the radial hole is configured to communicate with the axial hole to convey the oil to the bearing between the planetary shaft and the planet gear of the one planetary gear set for lubrication. In this way, the oil output from the motor shaft oil hole can flow to the bearing between the planetary shaft and the planet gear of the one planetary gear set through the axial hole and the radial hole in sequence, and lubricate the bearing. This ensures normal operation of the planet gear of the one planetary gear set.

In an embodiment, an opening of the axial hole of the planetary shaft of the one planetary gear set faces a groove bottom of the groove. It is convenient for the motor shaft oil hole that is located between the sun gear and the groove bottom of the groove to input the oil into the axial hole of the planetary shaft of the one planetary gear set in the axial direction of the powertrain, to lubricate the bearing between the planetary shaft and the planet gear of the one planetary gear set.

In an embodiment, the planetary reducer further includes another planetary gear set. An outer circumferential surface of one end of a planet carrier of the one planetary gear set is configured to be in a transmission connection to a sun gear of the another planetary gear set. A central hole of a planet carrier of the another planetary gear set is configured to fasten a half shaft of a wheel of an electric vehicle. An inner side of the other end of the planet carrier of the one planetary gear set is configured to accommodate the sun gear of the one planetary gear set.

In this embodiment of this application, the planetary reducer further includes the another planetary gear set, and the outer circumferential surface of the one end of the planet carrier of the one planetary gear set is configured to be in the transmission connection to the sun gear of the another planetary gear set. In this way, power transmitted by the one planetary gear set can be transmitted to the sun gear of the another planetary gear set through the planet carrier of the one planetary gear set, to drive the sun gear and the planet gear of the another planetary gear set to move. This makes the planetary reducer may implement two-stage deceleration.

In this embodiment of this application, the outer circumferential surface of the one end of the planet carrier of the one planetary gear set is used to fasten a sun gear of a second-stage planetary gear set, and the sun gear of the motor shaft is accommodated on the inner side of the other end of the planet carrier of the one planetary gear set. In this way, structures of the planetary gear sets in two stages can be arranged compactly in an axial direction.

In this embodiment of this application, the central hole of the planet carrier of the another planetary gear set is configured to fasten the half shaft of the wheel of the electric vehicle, and the half shaft of the wheel of the electric vehicle is directly fastened to the central hole of the planet carrier of the another planetary gear set. In this way, use of an additional spline can be reduced, and transmission between the planetary reducer and the half shaft of the wheel of a electric vehicle is more stable. This helps improve overall vehicle performance.

In this embodiment of this application, the inner side of the other end of the planet carrier of the one planetary gear set is configured to accommodate the sun gear of the one planetary gear set. In this way, a structure of the one planetary gear set is arranged more compactly, and it is also more convenient for the sun gear of the one planetary gear set to transmit power to the planet gear of the one planetary gear set through the planet carrier of the one planetary gear set.

In an embodiment, an inner wall of the reducer housing includes an annular protrusion. The annular protrusion protrudes away from the rotor in the axial direction of the powertrain. An inner circumferential surface of the annular protrusion is configured to fasten a ring gear of the one planetary gear set. An outer circumferential surface of the annular protrusion is configured to fasten a bearing of the planet carrier of the another planetary gear set.

In this embodiment of this application, the inner circumferential surface of the annular protrusion is configured to fasten the ring gear of the one planetary gear set, and the outer circumferential surface of the annular protrusion is configured to fasten the bearing of the planet carrier of the another planetary gear set. In this way, the planet carrier of the another planetary gear set may be arranged to use axial space outside the ring gear of the one planetary gear set, so that the one planetary gear set is arranged more compactly with the another planetary gear set. This reduces the axial size of the planetary reducer, makes a process of transmitting power from the motor shaft to the half shaft of the wheel of the electric vehicle more stable, and helps increase the critical rotation speed of the rotor. A smaller axial size of the planetary reducer further helps shorten an axial length of the powertrain and optimize a layout of the powertrain in the entire vehicle.

In an embodiment, a central hole at the one end of the planet carrier of the one planetary gear set is configured to fasten one bearing of the planet carrier of the another planetary gear set. An end face of the one end of the motor shaft includes an axial through hole. An opening of the axial through hole faces the central hole at the one end of the planet carrier of the one planetary gear set. The axial through hole is configured to output oil in the internal oil channel of the motor shaft to the central hole.

In this embodiment of this application, the central hole at the one end of the planet carrier of the one planetary gear set is configured to fasten the one bearing of the planet carrier of the another planetary gear set, the end face of the one end of the motor shaft includes the axial through hole, and the opening of the axial through hole faces the central hole at the one end of the planet carrier of the one planetary gear set. In this way, the oil in the internal oil channel of the motor shaft may be input into the central hole at the one end of the planet carrier of the one planetary gear set through the axial through hole, to lubricate the one bearing of the planet carrier of the another planetary gear set.

In an embodiment, the planet carrier of the another planetary gear set includes a half shaft hole and a seal. One opening of the half shaft hole extends out of the reducer housing to accommodate the half shaft of the wheel. Another opening of the half shaft hole faces the central hole at the one end of the planet carrier of the one planetary gear set. One end of the seal is configured to seal the another opening of the half shaft hole, and the other end of the seal is configured to fasten the one bearing of the planet carrier of the another planetary gear set.

In this embodiment of this application, the one opening of the half shaft hole extends out of the reducer housing to accommodate the half shaft of the wheel, the another opening of the half shaft hole faces the central hole at the one end of the planet carrier of the one planetary gear set, and the one end of the seal is configured to seal the another opening of the half shaft hole. In this way, the one end of the seal may seal oil flowing from the internal oil channel of the motor shaft into the central hole at the one end of the planet carrier of the one planetary gear set, to avoid leakage of the oil in the internal oil channel of the motor shaft from the half shaft hole.

In this embodiment of this application, the other end of the seal is configured to fasten the one bearing of the planet carrier of the another planetary gear set, and the one bearing of the planet carrier of the another planetary gear set is further fastened to the central hole at the one end of the planet carrier of the one planetary gear set. In this way, the planet carrier of the another planetary gear set may rotate relative to the planet carrier of the one planetary gear set. In addition, the one bearing, fastened to the other end of the seal, of the planet carrier of the another planetary gear set may receive the oil from the internal oil channel of the motor shaft in the central hole at the one end of the planet carrier of the one planetary gear set for lubrication.

In an embodiment, the seal includes a positioning groove, and a groove opening of the positioning groove is away from the one planetary gear set in the axial direction of the powertrain. An inner diameter of the positioning groove is less than an inner diameter of the half shaft hole, and the positioning groove is configured to accommodate a part of the half shaft of the wheel to limit movement of the half shaft in the radial direction of the powertrain.

In this embodiment of this application, compared with positioning the half shaft with the planetary reducer outside the reducer housing, enabling the half shaft to penetrate the groove opening of the positioning groove and extend into the positioning groove of the seal may shorten an axial length between the rotor of the drive motor and the half shaft, improve power transmission stability, and help increase the critical rotation speed of the rotor.

In this embodiment of this application, the inner diameter of the positioning groove is less than the inner diameter of the half shaft hole, and the positioning groove is configured to accommodate a part of the half shaft of the wheel to limit radial movement of the half shaft along the powertrain. This helps make transmission between the another planetary gear set and the half shaft of the wheel more stable, and improves reliability of the powertrain.

In an embodiment, the seal further includes one thrust bearing groove. A groove opening of the one thrust bearing groove faces the sun gear of the another planetary gear set in the axial direction of the powertrain. The one thrust bearing groove is configured to accommodate one needle roller thrust bearing. The one needle roller thrust bearing is configured to rotatably connect the sun gear of the another planetary gear set and the seal. The one thrust bearing groove surrounds an outer circumference of the positioning groove, and a projection of the positioning groove and a projection of the one thrust bearing groove at least partially overlap in a radial direction of the powertrain.

In this embodiment of this application, the one needle roller thrust bearing is configured to rotatably connect the sun gear of the another planetary gear set and the seal. In this way, the sun gear and the planet carrier of the another planetary gear set can rotate separately.

In this embodiment of this application, the one thrust bearing groove surrounds the outer circumference of the positioning groove, and the projection of the positioning groove and the projection of the one thrust bearing groove at least partially overlap in the radial direction of the powertrain. In this way, an axial length between the rotor and the half shaft can be shortened. This improves power transmission stability, and helps increase the critical rotation speed of the rotor.

In an embodiment, one side that is of the planet carrier of the another planetary gear set and that is away from the motor shaft further includes another thrust bearing groove. The another thrust bearing groove is configured to accommodate another needle roller thrust bearing. In the axial direction of the powertrain, two sides of the another needle roller thrust bearing are respectively in contact with a groove bottom of a second groove of a second housing and the planet carrier of the another planetary gear set. In this way, the planet carrier of the another planetary gear set can rotate relative to the second housing.

In an embodiment, the one needle roller thrust bearing and the another needle roller thrust bearing can axially limit and fasten the planet carrier of the another planetary gear set.

According to a second aspect, this application provides an electric vehicle. The electric vehicle includes a vehicle frame and the powertrain according to the first aspect. The vehicle frame is configured to fasten the powertrain. The drive motor of the powertrain is configured: to receive power supply from a power battery and drive the wheel through the planetary reducer.

In the powertrain in this embodiment of this application, the one end of the motor shaft extends into the inner cavity of the reducer housing from the through hole in an axial direction of the powertrain, and the one end of the motor shaft is configured to serve as the sun gear of the one planetary gear set. In this way, the rotor of the drive motor can directly transmit power to a planet gear of the one planetary gear set of the planetary reducer through the one end of the motor shaft, so that a degree of integration between the drive motor and the planetary reducer is higher, and a transmission process between the drive motor and the planetary reducer is more stable. This helps improve reliability of the powertrain. Compared with enabling the sun gear of the one planetary gear set to be in a transmission connection to the motor shaft through a spline, using the one end of the motor shaft as the sun gear of the one planetary gear set to directly receive power of the rotor of the drive motor helps improve a bending resistance capability of the motor shaft, and further increases the critical rotation speed of the rotor of the drive motor.

### BRIEF DESCRIPTION OF DRAWINGS

To describe technical solutions in embodiments of this application more clearly, the following describes the accompanying drawings used in embodiments of this application.
FIG. 1 is a diagram of an electric vehicle according to an embodiment of this application;
FIG. 2 is a diagram of a powertrain according to an embodiment of this application;
FIG. 3 is a sectional view of a powertrain according to an embodiment of this application;
FIG. 4 is a sectional view of a planetary reducer and a motor shaft according to an embodiment of this application;
FIG. 5 is a diagram of a planetary reducer according to an embodiment of this application;
FIG. 6 is an exploded view of the planetary reducer in FIG. 5;
FIG. 7 is another diagram of a powertrain according to an embodiment of this application;
FIG. 8 is a diagram of a first housing according to an embodiment of this application;
FIG. 9 is a partially enlarged view of an M1 part of the powertrain in FIG. 3;
FIG. 10 is another diagram of a first housing according to an embodiment of this application;
FIG. 11 is an exploded view of a sensor bracket and a resolver sensor according to an embodiment of this application;
FIG. 12 is a partially enlarged view of an M2 part of the planetary reducer and the motor shaft in FIG. 4;
FIG. 13 is a diagram of a first-stage planetary gear set according to an embodiment of this application;
FIG. 14 is a diagram of a second-stage planetary gear set according to an embodiment of this application;
FIG. 15 is a partially enlarged view of an M3 part of the planetary reducer and the motor shaft in FIG. 4;
FIG. 16 is a diagram of a motor shaft according to an embodiment of this application;
FIG. 17 is a sectional view of a motor shaft and an oil guide pipe according to an embodiment of this application; and
FIG. 18 is a partially enlarged view of an M4 part of the powertrain in FIG. 3.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

For ease of understanding, the following first explains and describes English abbreviations and related technical terms used in embodiments of this application.

NVH: The NVH is short for noise, vibration, harshness.

This application provides a powertrain. A motor housing of the powertrain is configured to: fasten a stator of a drive motor and accommodate a rotor and a motor shaft that are of the drive motor. The rotor is fastened to the motor shaft. A reducer housing of the powertrain is configured to enclose an opening of the motor housing. An inner cavity of the reducer housing is configured to accommodate one planetary gear set of a planetary reducer. The reducer housing includes a through hole. The through hole is configured to connect the inner cavity of the reducer housing and an inner cavity of the motor housing. One end of the motor shaft extends into the inner cavity of the reducer housing from the through hole in an axial direction of the powertrain. The one end of the motor shaft is configured to serve as a sun gear of the one planetary gear set.

In this application, the one end of the motor shaft extends into the inner cavity of the reducer housing from the through hole in the axial direction of the powertrain, and the one end of the motor shaft is configured to serve as the sun gear of the one planetary gear set. In this way, the rotor of the drive motor can directly transmit power to a planet gear of the one planetary gear set of the planetary reducer through the one end of the motor shaft, so that a degree of integration between the drive motor and the planetary reducer is higher, and a transmission process between the drive motor and the planetary reducer is more stable. This helps improve reliability of the powertrain. Compared with enabling the sun gear of the one planetary gear set to be in a transmission connection to the motor shaft through a spline, using the one end of the motor shaft as the sun gear of the one planetary gear set to directly receive power of the rotor of the drive motor helps improve a bending resistance capability of the motor shaft, and further increases the critical rotation speed of the rotor of the drive motor.

An embodiment of this application provides a powertrain. The powertrain is used in an electric vehicle.

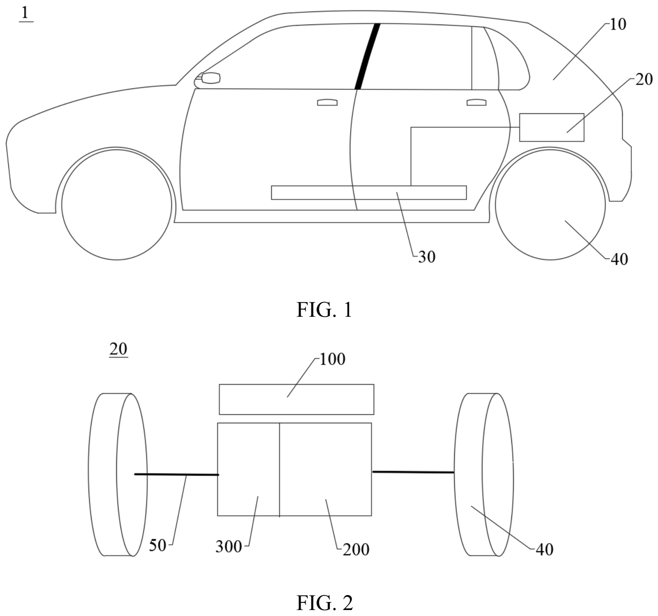

FIG. 1 is a diagram of an electric vehicle 1 according to an embodiment of this application.

In an embodiment, the electric vehicle 1 includes a vehicle frame 10, a powertrain 20, and a power battery 30. As shown in FIG. 1, the vehicle frame 10 is configured to fasten the powertrain 20 and the power battery 30. In this embodiment of this application, the electric vehicle 1 is a wheeled device driven or pulled by a power apparatus. In this embodiment of this application, the powertrain 20 is configured to drive a wheel 40.

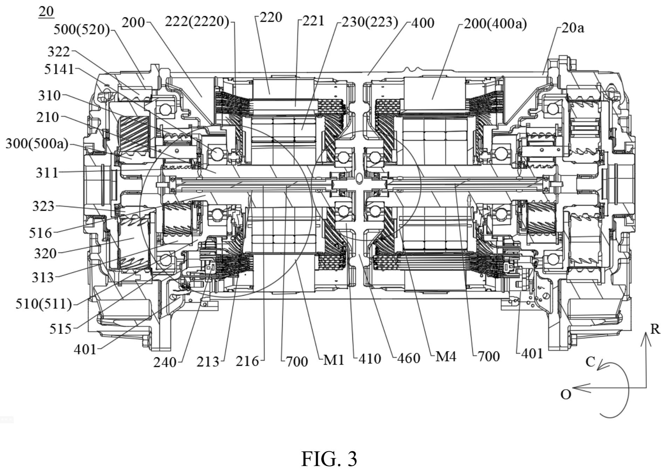

FIG. 2 is a diagram of the powertrain 20 according to an embodiment of this application; and FIG. 3 is a sectional view of the powertrain 20 according to an embodiment of this application.

In an embodiment, as shown in FIG. 2, the powertrain 20 includes a motor controller 100, a drive motor 200, and a reducer 300.

In this embodiment of this application, as shown in FIG. 2 and FIG. 3, the drive motor 200 includes a motor shaft 210, a motor stator 220, and a motor rotor 230. The reducer 300 includes a gear set. The motor controller 100 is configured to receive power supply from the power battery 30. The motor rotor 230 in the drive motor 200 is fastened to and sleeved on the motor shaft 210. After receiving a current provided by the motor controller 100, the motor stator 220 drives the motor rotor 230 to rotate, to drive the motor shaft 210 to rotate. The motor shaft 210 of the drive motor 200 is configured to: transmit kinetic energy to the gear set of the reducer 300, and further transmit power to the wheel 40 through a half shaft, to drive the wheel 40 to move.

In an embodiment, the motor stator 220 of the drive motor 200 includes a stator core 221 and a stator winding 222. In an axial direction O of the powertrain 20, an end winding 2220 is exposed on one side of the stator core 221. The end winding 2220 is connected to the motor controller 100 through an outgoing copper bar 240 to receive a three-phase alternating current, so that the rotor 230 of the drive motor 200 rotates.

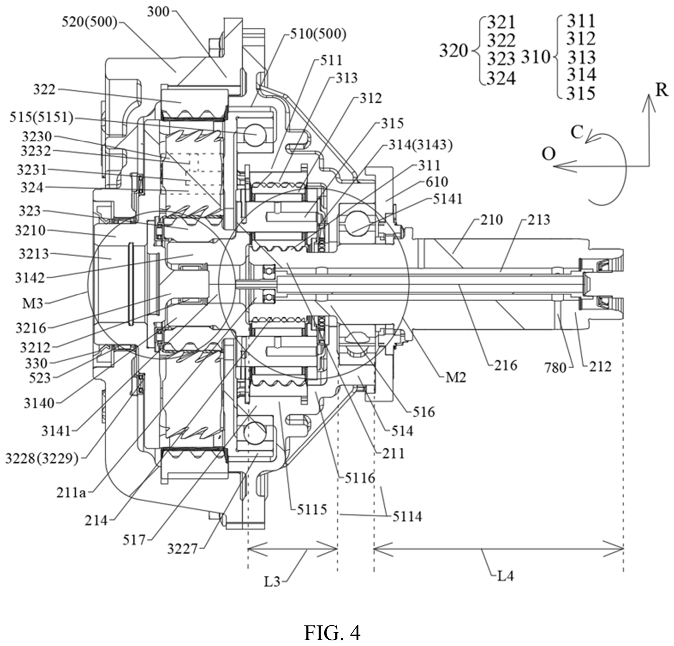

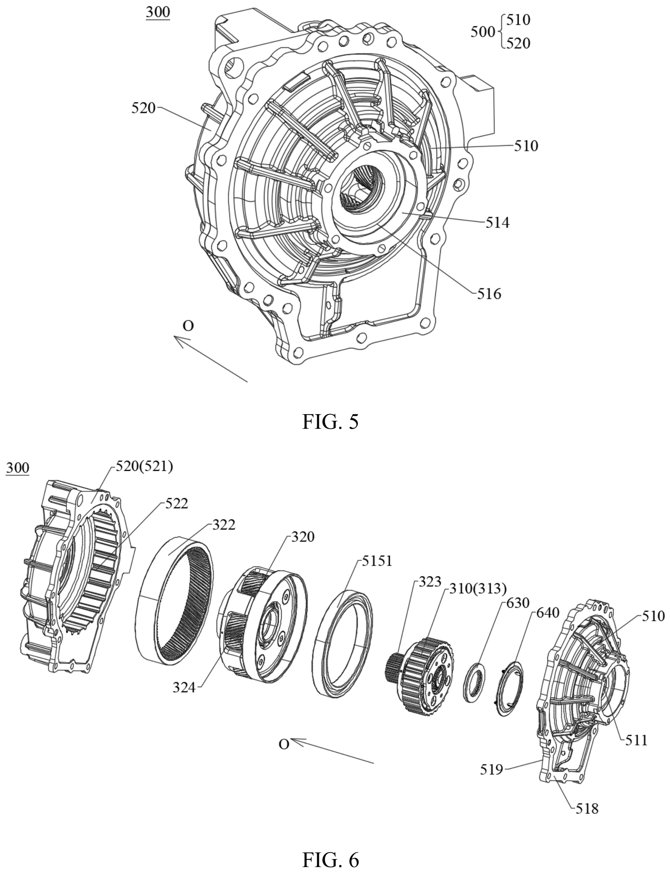

FIG. 4 is a sectional view of a planetary reducer 300 and the motor shaft 210 according to an embodiment of this application; FIG. 5 is a diagram of the planetary reducer 300 according to an embodiment of this application; and FIG. 6 is an exploded view of the planetary reducer 300 in FIG. 5.

In an embodiment, as shown in FIG. 4, the reducer 300 is the planetary reducer 300, and may also be referred to as a planetary coaxial reducer 300. When the planetary reducer 300 is a first-stage planetary reducer 300, a gear set of the planetary reducer 300 includes a planetary gear set 310. The planetary gear set 310 includes a sun gear 311, a plurality of planet gears 312, a ring gear 313, a planet carrier 314, and a plurality of planetary shafts 315. The sun gear 311 of the planetary gear set 310 is in a transmission connection to the motor shaft 210 of the drive motor 200, and the planet carrier 314 is in a transmission connection to a half shaft of a wheel. The half shaft of the wheel and the motor shaft 210 of the drive motor 200 are arranged coaxially.

In an embodiment, the planet carrier of the planetary reducer 300 is directly in a transmission connection to a half shaft 50 of the wheel 40 of the electric vehicle 1.

In an embodiment, as shown in FIG. 4 to FIG. 6, to make a speed ratio of the planetary reducer 300 large and meet a deceleration requirement of the electric vehicle 1, the planetary reducer 300 is a two-stage planetary reducer 300 or a two-stage planetary coaxial reducer 300. The gear set of the planetary reducer 300 includes two planetary gear sets 310 and 320. The planetary gear set 310 and the planetary gear set 320 are arranged in the axial direction O of the powertrain 20. The planetary gear set 310 in a transmission connection to the motor shaft 210 of the drive motor 200 is also referred to as a first-stage planetary gear set 310. The planetary gear set 320 in a transmission connection to the first-stage planetary gear set 310 and the half shaft 50 of the electric vehicle 1 is also referred to as a second-stage planetary gear set 320. A large deceleration is implemented through the planetary gear sets 310 and 320 at two stages.

In an embodiment, as shown in FIG. 4 to FIG. 6, a sun gear 311 of the first-stage planetary gear set 310 is configured to be in a transmission connection to the motor shaft 210 of the drive motor 200 and a planet gear 312 of the first-stage planetary gear set 310. The planet gear 312 of the first-stage planetary gear set 310 is configured to be engaged with a ring gear 313 of the first-stage planetary gear set 310. A planet carrier 314 of the first-stage planetary gear set 310 is configured to fasten a planetary shaft 315 that penetrates the plurality of planet gears 312 of the first-stage planetary gear set 310. A planet carrier 321 of the second-stage planetary gear set 320 is configured to fasten a planetary shaft of the second-stage planetary gear set 320, a sun gear 323 of the second-stage planetary gear set 320 is configured to be engaged with a planet gear 324 of the second-stage planetary gear set 320, and the planet gear 324 of the second-stage planetary gear set 320 is engaged with a ring gear 322 of the second-stage planetary gear set 320 and the planet carrier 314 of the first-stage planetary gear set 310.

In an embodiment, as shown in FIG. 3, a housing 20a of the powertrain 20 includes a motor housing 400 and a reducer housing 500. The motor housing 400 is configured to: fasten the stator 220 of the drive motor 200 and accommodate the rotor 230 of the drive motor 200. A central hole 223 of the stator 220 is configured to accommodate the rotor 230 of the drive motor 200. The reducer housing 500 is configured to accommodate the gear set of the planetary reducer 300. The motor housing 400 and the reducer housing 500 are arranged in the axial direction O of the powertrain 20. The reducer housing 500 may be divided into a first housing 510 and a second housing 520. The first housing 510 is configured to enclose the motor housing 400 to form a motor cavity 400a, and the second housing 520 is configured to enclose the first housing 510 to form a reducer cavity 500a. In an embodiment, the stator 220 of the drive motor 200 may also be referred to as the motor stator 220, and the rotor 230 of the drive motor 200 may also be referred to as the motor rotor 230.

In an embodiment, the powertrain 20 includes two drive motors 200 and two planetary reducers 300. As shown in FIG. 3, in the axial direction O of the powertrain 20, the two planetary reducers 300 are respectively arranged on two sides of the two drive motors 200. The stator 220 of each drive motor 200 is configured to: receive a current from the power battery 30 to rotate the rotor 230 of the drive motor 200, and transmit power to one planetary reducer 300 through the motor shaft 210, so as to drive the wheel 40 on one side of the electric vehicle 1 to move. The two drive motors 200 and the two planetary reducers 300 are respectively configured to control running of wheels 40 on two sides of the electric vehicle 1.

In an embodiment, the motor shaft 210 includes an internal oil channel 216. As shown in FIG. 3, the internal oil channel 216 of the motor shaft 210 is configured to receive oil conveyed by an internal oil channel of the housing 20a of the powertrain 20. Oil in the internal oil channel 216 of the motor shaft 210 is used to cool the rotor 230 of the drive motor 200 and lubricate the gear set of the planetary reducer 300, so that the planetary reducer 300 can operate normally.

The following describes in detail the powertrain 20 provided in embodiments of this application.

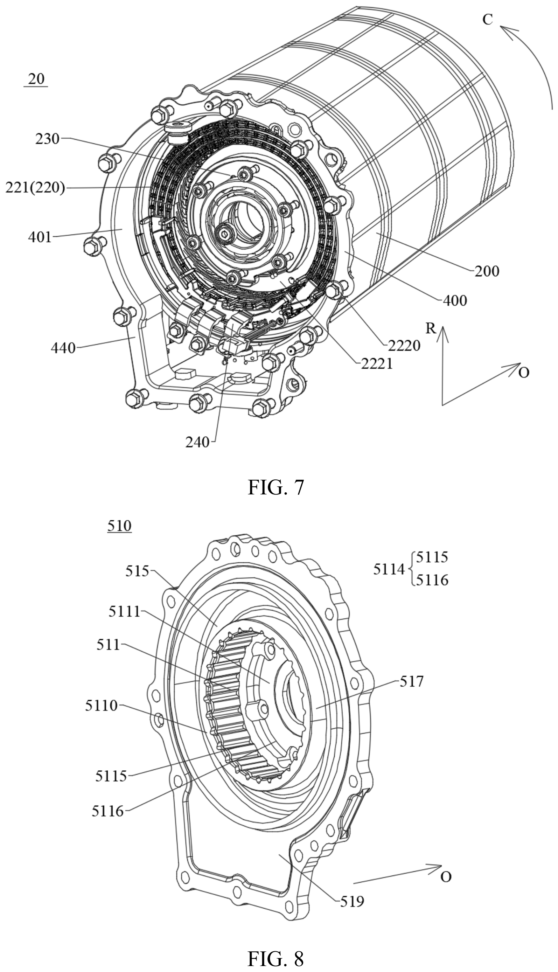

FIG. 7 is another diagram of the powertrain 20 according to an embodiment of this application; and FIG. 8 is a diagram of the first housing 510 according to an embodiment of this application.

In an embodiment, as shown in FIG. 3, FIG. 6, and FIG. 7, the powertrain 20 includes the motor housing 400 and the first housing 510. The motor housing 400 is configured to: fasten the stator 220 of the drive motor 200 and accommodate the rotor 230 of the drive motor 200. The motor shaft 210 of the drive motor 200 is configured to be in a transmission connection to the planetary gear set 310 of the planetary reducer 300. The first housing 510 is configured to enclose an opening 401 of the motor housing 400. As shown in FIG. 3, in the axial direction O of the powertrain 20, the end winding 2220 of the stator 220 is exposed on one side of the stator core 221 of the stator 220, and the end winding 2220 surrounds an outer circumference of the motor shaft 210 of the drive motor 200 in a circumferential direction C of the powertrain 20. As shown in FIG. 6 to FIG. 8, in the axial direction O of the powertrain 20, the first housing 510 is recessed toward an inner side area 2221 surrounded by the end winding 2220 to form a groove 511. A groove opening 5110 of the groove 511 is away from the rotor 230 of the drive motor 200, and the groove 511 is configured to accommodate the planetary gear set 310 of the planetary reducer 300.

In this embodiment of this application, in the axial direction O of the powertrain 20, the end winding 2220 of the stator 220 is exposed on the one side of the stator core 221 of the stator 220, and the end winding 2220 surrounds the outer circumference of the motor shaft 210 of the drive motor 200 in the circumferential direction C of the powertrain 20. In this way, in the axial direction O of the powertrain 20, the end winding 2220 and the rotor 230 of the drive motor 200 may form slot-like space, to provide a possibility that the first housing 510 is recessed toward space inside the end winding 2220.

In this embodiment of this application, in the axial direction O of the powertrain 20, the first housing 510 is recessed toward the inner side area 2221 surrounded by the end winding 2220 to form the groove 511, so that a part that is of the first housing 510 and that forms the groove 511 may extend into the inner side area 2221 surrounded by the end winding 2220. In this way, the first housing 510 in the powertrain 20 may be arranged to reuse a part of axial space and radial space of the end winding 2220 of the stator 220 of the drive motor 200. This helps reduce an axial size of the powertrain 20.

In this embodiment of this application, the groove opening 5110 of the groove 511 is away from the rotor 230 of the drive motor 200, so that after the first housing 510 is fastened to the motor housing 400, the planetary gear set 310 of the planetary reducer 300 may be assembled into the first housing 510 from a side of the groove opening 5110 of the groove 511, to facilitate an assembly process.

In this embodiment of this application, the groove 511 is configured to accommodate the planetary gear set 310 of the planetary reducer 300, so that a part of the planetary gear set 310 of the planetary reducer 300 may extend into the motor housing 400, and the planetary reducer 300 may be arranged to use axial space in the inner side area 2221 surrounded by the end winding 2220. In this way, the planetary gear set 310 of the planetary reducer 300 can be arranged more compactly with the rotor 230 and the stator 220 of the drive motor 200. This helps reduce an overall size of the planetary reducer 300 and the drive motor 200 in the axial direction O of the powertrain 20, helps reduce a volume of the powertrain 20, and optimizes a layout of the powertrain 20 in the entire vehicle.

In this embodiment of this application, the first housing 510 is recessed toward the inner side area 2221 surrounded by the end winding 2220 of the stator 220 to form the groove 511, and the planetary gear set 310 of the planetary reducer 300 is accommodated in the groove 511. In this way, the groove 511 of the first housing 510 is designed to fully use space inside the end winding 2220 in the axial direction O and the radial direction of the powertrain 20, and the planetary gear set 310 that is of the planetary reducer 300 and that is accommodated in the groove 511 may be arranged to reuse a part of axial space and radial space inside the end winding 2220. This helps reduce the axial size of the powertrain 20, helps miniaturize the powertrain 20, and optimizes the layout of the powertrain 20 in the entire vehicle.

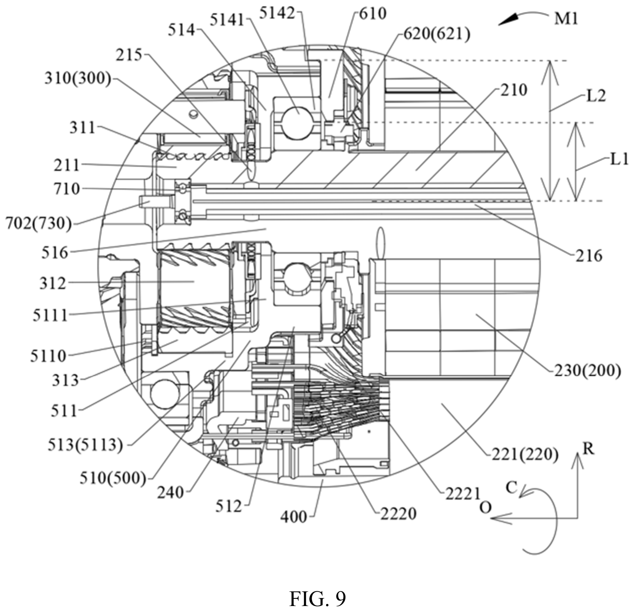

FIG. 9 is a partially enlarged view of an M1 part of the powertrain 20 in FIG. 3.

In an embodiment, as shown in FIG. 3, FIG. 7, and FIG. 9, the end winding 2220 is accommodated in the motor housing 400, and the end winding 2220 and the opening 401 of the motor housing 400 are spaced from each other in the axial direction O of the powertrain 20. In the axial direction O of the powertrain 20, the first housing 510 protrudes from the opening 401 of the motor housing 400 toward the inner side area 2221 surrounded by the end winding 2220, and a surface that is of the first housing 510 and that is away from the rotor 230 of the drive motor 200 is recessed to form the groove 511.

In this embodiment of this application, the end winding 2220 is accommodated in the motor housing 400. The end winding 2220 and the opening 401 of the motor housing 400 are spaced from each other in the axial direction O of the powertrain 20. In this way, there is space in the motor housing 400 for the first housing 510 to protrude toward the inner side area 2221 surrounded by the end winding 2220, so that the first housing 510 is arranged to not only use a part of axial space and radial space of the end winding 2220, but also use axial space between the end winding 2220 and the opening 401 of the motor housing 400 in the motor housing 400. In this way, the planetary reducer 300 is arranged to fully use the axial space in the motor housing 400, so that the planetary reducer 300 does not excessively occupy space, in a direction other than the axial direction O, of the powertrain 20 in the motor housing 400. In addition, the planetary gear set 310 of the planetary reducer 300 is arranged compactly with the stator 220 and the rotor 230 of the drive motor 200. This helps reduce the axial size of the powertrain 20, helps miniaturize the powertrain 20, and optimizes the layout of the powertrain 20 in the vehicle.

In this embodiment of this application, the surface that is of the first housing 510 and that is away from the rotor 230 of the drive motor 200 is recessed to form the groove 511, and the groove 511 is configured to accommodate the planetary gear set 310 of the planetary reducer 300. In this way, the planetary gear set 310 of the planetary reducer 300 may be arranged to fully utilize the axial space of the motor housing 400, so that the planetary gear set 310 may be arranged in the motor housing 400 in a radial direction R of the powertrain 20. This helps reduce the axial size of the powertrain 20, helps miniaturize the powertrain 20, and optimizes the layout of the powertrain 20 in the vehicle.

In an embodiment, as shown in FIG. 3, in the radial direction R of the powertrain 20, an inner diameter of the groove 511 is less than an inner diameter of an inner peripheral side surrounded by the end winding 2220. In this way, the first housing 510 can be recessed toward the inner side area 2221 surrounded by the end winding 2220 to form the groove 511, so that the planetary reducer 300 may be arranged to reuse a part of the space, in the axial direction O of the powertrain 20, of the inner side area 2221 surrounded by the end winding 2220, and the axial size of the powertrain 20 is small.

In an embodiment, as shown in FIG. 3, FIG. 8, and FIG. 9, in the axial direction O of the powertrain 20, a part of the first housing 512 is configured to be embedded in the inner side area 2221 surrounded by the end winding 2220. In the axial direction O of the powertrain 20, a surface of a part that is of the first housing 512 and that is away from the rotor 230 of the drive motor 200 forms a groove bottom 5111 of the groove 511.

In this embodiment of this application, in the axial direction O of the powertrain 20, the part of the first housing 512 is configured to be embedded in the inner side area 2221 surrounded by the end winding 2220. In this way, the part of the first housing 512 may be arranged to use axial space of the inner side area 2221 surrounded by the end winding 2220. This helps arrange the planetary gear set 310 of the planetary reducer 300 and the stator 220 of the drive motor 200 more compactly, and reduces an overall axial size of the planetary reducer 300 and the drive motor 200, so that the axial size of the powertrain 20 is reduced.

In this embodiment of this application, in the axial direction O of the powertrain 20, the surface of the part that is of the first housing 512 and that is away from the rotor 230 of the drive motor 200 forms the groove bottom 5111 of the groove 511. In this way, the groove bottom 5111 of the groove 511 may be disposed in the inner side area 2221 surrounded by the end winding 2220, to fully use the axial space and the radial space of the inner side area 2221 surrounded by the end winding 2220, so that the first housing 510 is arranged more compactly with the end winding 2220, and it is more conducive to shortening the axial size of the powertrain 20.

In an embodiment, as shown in FIG. 3, in the axial direction O of the powertrain 20, a length of the first housing 510 is greater than a spacing between the opening 401 of the motor housing 400 and the end winding 2220.

In this embodiment of this application, in the axial direction O of the powertrain 20, the length of the first housing 510 is large, so that the first housing 510 is long enough. In this way, the part of the first housing 512 may extend from the opening 401 of the motor housing 400 into the inner side area 2221 surrounded by the end winding 2220, to fully use space inside the end winding 2220, so that an overall axial size of the planetary reducer 300 and the drive motor 200 is small, and the axial size of the powertrain 20 is small.

In an embodiment, as shown in FIG. 7 and FIG. 9, the end winding 2220 is connected to the motor controller 100 through the outgoing copper bar 240 to receive the three-phase alternating current. In the axial direction O of the powertrain 20, the outgoing copper bar 240 extends, from the end winding 2220, away from the stator core 221. In the radial direction R of the powertrain 20, another part of the first housing 513 is configured to be embedded between the outgoing copper bar 240 and the motor shaft 210. In the radial direction R of the powertrain 20, a surface of the another part that is of the first housing 513 and that is away from the outgoing copper bar 240 forms a part of a groove circumferential wall 5113 of the groove 511.

In this embodiment of this application, in the radial direction R of the powertrain 20, the another part of the first housing 513 is configured to be embedded between the outgoing copper bar 240 and the motor shaft 210. In this way, the another part of the first housing 513 may be arranged to fully use space, in the radial direction R of the powertrain 20, between the outgoing copper bar 240 and the motor shaft 210, so that the another part of the first housing 513 may be arranged to use a part of the axial space of the motor housing 400. This helps reduce the axial size of the powertrain 20.

In this embodiment of this application, in the radial direction R of the powertrain 20, the surface of the another part that is of the first housing 513 and that is away from the outgoing copper bar 240 forms the part of the groove circumferential wall 5113 of the groove 511, and the groove 511 is configured to accommodate the planetary gear set 310 of the planetary reducer 300. In this way, the planetary gear set 310 of the planetary reducer 300 may be arranged to use space, in the radial direction R of the powertrain 20, between the outgoing copper bar 240 and the motor shaft 210, and the planetary reducer 300 is arranged more compactly with the outgoing copper bar 240. This facilitates a compact layout of the planetary reducer 300, the outgoing copper bar 240, and the end winding 2220 in the axial direction O and the radial direction R of the powertrain 20, and helps miniaturize the powertrain 20.

In an embodiment, as shown in FIG. 3 and FIG. 9, in the axial direction O of the powertrain 20, a depth of the groove 511 is greater than a spacing between the opening 401 of the motor housing 400 and the outgoing copper bar 240.

In this embodiment of this application, the depth of the groove 511 is large in the axial direction O of the powertrain 20, so that the groove 511 is deep enough. In this way, the groove 511 has sufficient space to accommodate the plurality of planet gears 312 of the planetary gear set 310, so that the planetary gear set 310 can be arranged in an inner side area of the end winding 2220 or the outgoing copper bar 240. The planetary gear set 310 of the planetary reducer 300 is arranged to use a part of internal axial space of the motor housing 400, so that the planetary reducer 300 does not excessively occupy space, in a direction other than the axial direction O of the powertrain 20, of the motor housing 400, and the axial size of the powertrain 20 is small.

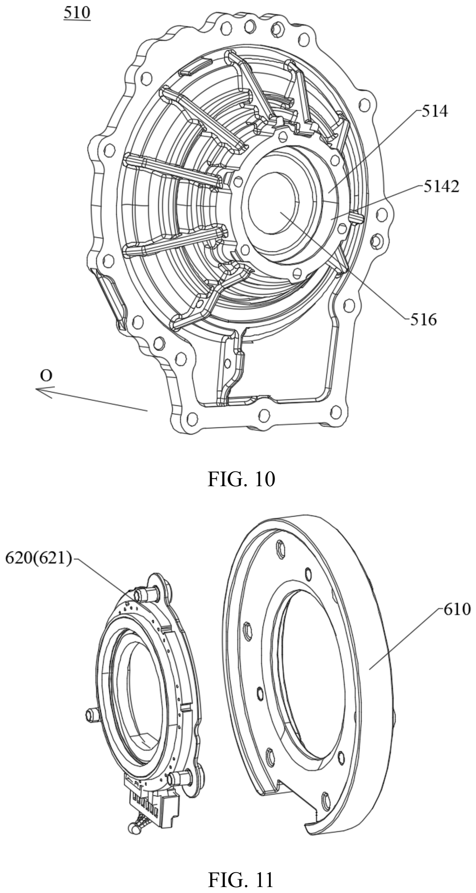

FIG. 10 is another diagram of the first housing 510 according to an embodiment of this application.

In an embodiment, as shown in FIG. 9 and FIG. 10, the first housing 510 further includes a motor shaft bearing groove 514. The motor shaft bearing groove 514 is configured to fasten an outer ring of a motor bearing 5141, and an inner ring of the motor bearing 5141 is fastened to the motor shaft 210. In the axial direction O of the powertrain 20, a groove opening 5142 of the motor shaft bearing groove 514 faces away from the groove opening 5110 of the groove 511, and the groove opening 5142 of the motor shaft bearing groove 514 is configured to be embedded in the inner side area 2221 surrounded by the end winding 2220.

In this embodiment of this application, in the axial direction O of the powertrain 20, the groove opening 5142 of the motor shaft bearing groove 514 faces away from the groove opening 5110 of the groove 511. In this way, the motor shaft bearing groove 514 that accommodates the motor bearing 5141 may be arranged to use a part of a wall thickness of the groove bottom 5111 of the groove 511, and the motor bearing 5141 is arranged closer to the rotor 230 of the drive motor 200. This facilitates fastening of the motor bearing 5141 to the motor shaft 210. In addition, as the groove 511 is formed on the left side of the first housing 510 to accommodate the planetary reducer 300, the motor shaft bearing groove 514 needs to be formed on the right side of the first housing 510 to fasten the motor bearing 5141. Therefore, in the axial direction O of the powertrain 20, the groove opening 5142 of the motor shaft bearing groove 514 needs to face away from the groove opening 5110 of the groove 511.

In this embodiment of this application, the groove opening 5142 of the motor shaft bearing groove 514 is configured to be embedded in the inner side area 2221 surrounded by the end winding 2220. In this way, the motor shaft bearing groove 514 and the motor bearing 5141 may both extend into the inner side area 2221 surrounded by the end winding 2220, and the motor bearing 5141 may be arranged to use a part of space of the inner side area 2221 surrounded by the end winding 2220 of the stator 220 of the drive motor 200. This helps reduce the axial size of the powertrain 20.

In an embodiment, as shown in FIG. 3 and FIG. 9, in the axial direction O of the powertrain 20, a spacing between the groove opening 5142 of the motor shaft bearing groove 514 and the groove opening 5110 of the groove 511 is greater than the spacing between the opening 401 of the motor housing 400 and the outgoing copper bar 240. In the radial direction R of the powertrain 20, an outer diameter of a part that is of the first housing 510 and that corresponds to the motor shaft bearing groove 514 is less than an outer diameter of the end winding 2220.

In this embodiment of this application, in the axial direction O of the powertrain 20, the spacing between the groove opening 5142 of the motor shaft bearing groove 514 and the groove opening 5110 of the groove 511 is greater than the spacing between the opening 401 of the motor housing 400 and the outgoing copper bar 240. As the groove 511 is formed on the left side of the first housing 510 to accommodate the planetary reducer 300, the motor shaft bearing groove 514 needs to be formed on the right side of the first housing 510 to fasten the motor bearing 5141. The spacing between the groove opening 5142 of the motor shaft bearing groove 514 and the groove opening 5110 of the groove 511 is designed to be large, so that the motor bearing 5141 can extend into the inner side area 2221 surrounded by the end winding 2220. This fully uses the inner side area of the end winding 2220, and helps reduce the axial size of the powertrain 20.

In this embodiment of this application, in the radial direction R of the powertrain 20, the outer diameter of the part that is of the first housing 510 and that corresponds to the motor shaft bearing groove 514 is less than the outer diameter of the end winding 2220. In this way, an outer wall of the motor shaft bearing groove 514 can extend into the inner side area 2221 surrounded by the end winding 2220, and the motor bearing 5141 can extend into the inner side area 2221 surrounded by the end winding 2220.

In an embodiment, as shown in FIG. 3, the motor housing 400 is configured to fasten the reducer housing 500 of the powertrain 20. The reducer housing 500 is configured to: enclose the opening 401 of the motor housing 400 and fasten the bearing 5141 of the motor shaft 210. As shown in FIG. 3 and FIG. 9, the motor rotor 230 and the gear set of the first-stage planetary gear set 310 are arranged on two sides, in an axial direction O of the drive motor 200, of the bearing 5141 of the motor shaft 210 inside the motor housing 400.

In this embodiment of this application, the motor housing 400 is configured to fasten the reducer housing 500 of the powertrain 20. The reducer housing 500 is configured to: enclose the opening 401 of the motor housing 400 and fasten the bearing 5141 of the motor shaft 210, so that the reducer housing 500 and the motor housing 400 can be arranged in the axial direction O of the powertrain 20.

In this embodiment of this application, as the planetary coaxial reducer 300 includes the first-stage planetary gear set 310 and the second-stage planetary gear set 320, an axial length of the planetary coaxial reducer 300 is large. Consequently, when the planetary coaxial reducer 300 and the drive motor 200 are arranged in the axial direction O of the drive motor 200, the axial size of the powertrain 20 is large, and it is not conducive to miniaturization of the powertrain 20. The motor rotor 230 and the gear set of the first-stage planetary gear set 310 are arranged on two sides, in the axial direction O of the drive motor 200, of the bearing 5141 of the motor shaft 210 inside the motor housing 400, and the gear set of the first-stage planetary gear set 310 is arranged inside the motor housing 400, so that the planetary coaxial reducer 300 is arranged to fully use space inside the motor housing 400, and the planetary coaxial reducer 300 can be arranged compactly with the drive motor 200. In this way, the first-stage planetary gear set 310 of the planetary coaxial reducer 300 is arranged without additionally occupying space, in a direction other than the axial direction O of the drive motor 200, of the motor housing 400. This shortens the axial size of the powertrain 20, miniaturizes the powertrain 20, and optimizes the layout of the powertrain 20 in the entire vehicle.

In an embodiment, the bearing 5141 of the motor shaft 210 may also be referred to as the motor bearing 5141.

In an embodiment, as shown in FIG. 7 and FIG. 9, the motor housing 400 surrounds the end winding 2220 on one side that is of the motor stator 220 and that faces the planetary coaxial reducer 300, and the end winding 2220 on the one side that is of the motor stator 220 and that faces the planetary coaxial reducer 300 surrounds the bearing 5141 of the motor shaft 210 in the circumferential direction C of the powertrain 20.

In this embodiment of this application, the motor housing 400 surrounds the end winding 2220 on the one side that is of the motor stator 220 and that faces the planetary coaxial reducer 300. In this way, the end winding 2220 on the one side that is of the motor stator 220 and that faces the planetary coaxial reducer 300 is arranged inside the motor housing 400 in the axial direction O of the powertrain 20, without additionally occupying space, in a direction other than the axial direction of the powertrain 20, of the motor housing 400. The end winding 2220 on the one side that is of the motor stator 220 and that faces the planetary coaxial reducer 300 surrounds the bearing 5141 of the motor shaft 210 in the circumferential direction C of the powertrain 20, so that the bearing 5141 of the motor shaft 210 may be arranged, in the radial direction R and the axial direction O of the powertrain 20, inside the end winding 2220 on the one side facing the planetary coaxial reducer 300. In this way, the bearing 5141 of the motor shaft 210 may be arranged to fully use space inside the end winding 2220, and the bearing 5141 of the motor shaft 210 is arranged more compactly with the motor rotor 230, to shorten the axial size of the powertrain 20.

FIG. 11 is an exploded view of a sensor bracket 610 and a resolver sensor 620 according to an embodiment of this application.

In an embodiment, as shown in FIG. 9 and FIG. 11, the first housing 510 is further configured to fasten the sensor bracket 610, and the sensor bracket 610 is configured to fasten a stator 621 of the resolver sensor 620. The first housing 510, the sensor bracket 610, and the rotor 230 of the drive motor 200 are sequentially arranged in the axial direction O of the powertrain 20. The sensor bracket 610 is configured to be embedded in the inner side area 2221 surrounded by the end winding 2220.

In this embodiment of this application, in the axial direction O of the powertrain 20, the groove 511 on one side that is of the first housing 510 and that is away from the rotor 230 of the drive motor 200 is configured to accommodate the planetary gear set 310 of the planetary reducer 300. In this way, space on the one side that is of the first housing 510 and that is away from the rotor 230 is occupied. The stator 621 of the resolver sensor 620 is mounted between the first housing 510 and the rotor 230 of the drive motor 200. In this way, the first housing 510, the sensor bracket 610, and the rotor 230 of the drive motor 200 are sequentially arranged in the axial direction O of the powertrain 20, and space on two sides of the first housing 510 is fully used.

In this embodiment of this application, the sensor bracket 610 is configured to be embedded in the inner side area 2221 surrounded by the end winding 2220, so that the sensor bracket 610 may be disposed in the inner side area 2221 surrounded by the end winding 2220. In this way, the sensor bracket 610 is arranged without additionally occupying space, in the direction other than the axial direction of the powertrain 20, of the inner side area 2221 surrounded by the end winding 2220. This helps reduce the axial size of the powertrain 20.

In an embodiment, as shown in FIG. 9, in the radial direction R of the powertrain 20, a spacing between an outer peripheral wall of the sensor bracket 610 and an axis of the motor shaft 210 is less than a spacing between the end winding 2220 and the axis of the motor shaft 210. In this way, the sensor bracket 610 has a small size in the radial direction R of the powertrain 20, so that the sensor bracket 610 can be accommodated in the inner side area 2221 surrounded by the end winding 2220. In this way, the sensor bracket 610 may be arranged to fully use radial space and axial space of the inner side area 2221 surrounded by the end winding 2220. This helps shorten the axial size of the powertrain 20.

In an embodiment, as shown in FIG. 9, the sensor bracket 610 is further configured to clamp an outer ring of the motor bearing 5141 in the axial direction O of the powertrain 20. In the radial direction R of the powertrain 20, the spacing between the sensor bracket 610 and the axis of the motor shaft 210 is less than half of an inner diameter of the motor shaft bearing groove 514.

In this embodiment of this application, the first housing 510 and the sensor bracket 610 occupy the space of the inner side area 2221 surrounded by the end winding 2220. Therefore, there is little space between the first housing 510 and the rotor 230 of the drive motor 200, and there is no space to additionally add a clamping plate to clamp the motor bearing 5141. The sensor bracket 610 is reused to clamp the outer ring of the motor bearing 5141. This helps improve a degree of integration of the powertrain 20.

In this embodiment of this application, in the radial direction R of the powertrain 20, the spacing between the sensor bracket 610 and the axis of the motor shaft 210 is denoted as L1, and half of the inner diameter of the motor shaft bearing groove 514 is denoted as L2. L1 is less than L2, so that the sensor bracket 610 may be in contact with the outer ring of the motor bearing 5141 in the motor shaft bearing groove 514. In this way, the sensor bracket 610 used to fasten the stator 621 of the resolver sensor 620 may be reused to clamp the outer ring of the motor bearing 5141, so that the sensor bracket 610 can achieve an effect of reducing axial fluttering of the rotor 230. This further improves NVH performance of the powertrain 20, reduces use of an additional clamping plate, and helps reduce production costs.

In an embodiment, as shown in FIG. 9, one side that is of the reducer housing 500 and that faces the drive motor 200 is further configured to fasten an outer ring of one resolver sensor 620. An inner ring of the one resolver sensor 620 is arranged between the bearing 5141 of the motor shaft 210 and the motor rotor 230 in the axial direction O of the drive motor 200. The motor shaft 210 is configured to: penetrate the inner ring of the one resolver sensor 620 and extend into the reducer housing 500 for a transmission connection to the first-stage planetary gear set 310.

In this embodiment of this application, the one side that is of the reducer housing 500 and that faces the drive motor 200 is further configured to fasten the outer ring of the one resolver sensor 620, and the inner ring of the one resolver sensor 620 is arranged between the bearing 5141 of the motor shaft 210 and the motor rotor 230 in the axial direction O of the drive motor 200. In this way, the one resolver sensor 620 may be arranged to fully use axial space between the bearing 5141 of the motor shaft 210 and the motor rotor 230, and the one resolver sensor 620 may be accommodated in the end winding 2220, so that space in the end winding 2220 is further used, and a layout of components in the powertrain 20 is more compact. This helps reduce the axial size of the powertrain 20, to obtain a powertrain 20 with a smaller volume, and optimize the layout of the powertrain 20 in the entire vehicle.

In this embodiment of this application, the motor shaft 210 is configured to: penetrate the inner ring of the resolver sensor 620 and extend into the reducer housing 500 for the transmission connection to the first-stage planetary gear set 310. In this way, it is convenient for the resolver sensor 620 to receive rotation speed information of the motor rotor 230 driven by the motor shaft 210. The motor shaft 210 extends into the reducer housing 500. This further helps improve stability of transmission between the motor shaft 210 and the first-stage planetary gear set 310.

The axial direction O of the drive motor 200 is the same as the axial direction of the powertrain 20.

In an embodiment, as shown in FIG. 9, one side that is of the reducer housing 500 and that faces the drive motor 200 further includes the motor shaft bearing groove 514. The motor shaft bearing groove 514 is configured to fasten the outer ring of the bearing 5141 of the motor shaft 210. The inner ring of the bearing 5141 of the motor shaft 210 is configured to be sleeved on the motor shaft 210. A groove wall of the motor shaft bearing groove 514 is configured to fasten one sensor bracket 610. The one sensor bracket 610 is configured to: fasten the outer ring of the one resolver sensor 620 and surround the one resolver sensor 620 in a circumferential direction of the resolver sensor 620. As shown in FIG. 9 and FIG. 10, a groove bottom of the motor shaft bearing groove 514 includes a through hole 516. The motor shaft 210 penetrates the through hole 516 and extends into the reducer housing 500.

In this embodiment of this application, the groove wall of the motor shaft bearing groove 514 is configured to fasten the one sensor bracket 610, and the one sensor bracket 610 is configured to: fasten the outer ring of the one resolver sensor 620 and surround the one resolver sensor 620 in the circumferential direction of the resolver sensor 620. In this way, the sensor bracket 610 is arranged to use space, outside the one resolver sensor 620 in the end winding 2220, in the radial direction R of the powertrain 20, without excessively occupying space in the axial direction of the powertrain 20. This helps reduce the axial size of the powertrain 20.

In this embodiment of this application, the sensor bracket 610 is fastened to the groove wall of the motor shaft bearing groove 514, and the motor shaft bearing groove 514 is configured to fasten the bearing 5141 of the motor shaft 210. In this way, the sensor bracket 610 may be reused as a baffle plate of the bearing 5141 of the motor shaft 210, to limit the bearing 5141 of the motor shaft 210 in the motor shaft bearing groove 514. This reduces an amount of axial fluttering of the bearing 5141 of the motor shaft 210.

In this embodiment of this application, the groove bottom of the motor shaft bearing groove 514 includes the through hole 516, so that the motor shaft 210 can extend into the reducer housing 500 through the groove bottom of the motor shaft bearing groove 514 for the transmission connection to the first-stage planetary gear set 310.

In an embodiment, as shown in FIG. 9, one end 211 that is of the motor shaft 210 and that extends into the reducer housing 500 is configured to serve as the sun gear 311 of the first-stage planetary gear set 310 to drive the planet gear 312 of the first-stage planetary gear set 310.

In this embodiment of this application, the one end 211 that is of the motor shaft 210 and that extends into the reducer housing 500 serves as the sun gear 311 of the first-stage planetary gear set 310, so that transmission between the motor shaft 210 and the first-stage planetary gear set 310 is more direct, and no additional component transmission is required. This helps make transmission between the drive motor 200 and the planetary coaxial reducer 300 more stable, further increases the critical rotation speed of the drive motor 200, and makes arrangement between the motor shaft 210 and the first-stage planetary gear set 310 more compact, thereby reducing the axial size of the powertrain 20, and helping miniaturize the powertrain 20.

In an embodiment, the motor shaft 210 is an integrated shaft, so that a degree of integration of the powertrain 20 is higher, further enhancing stability and reliability of the powertrain 20.

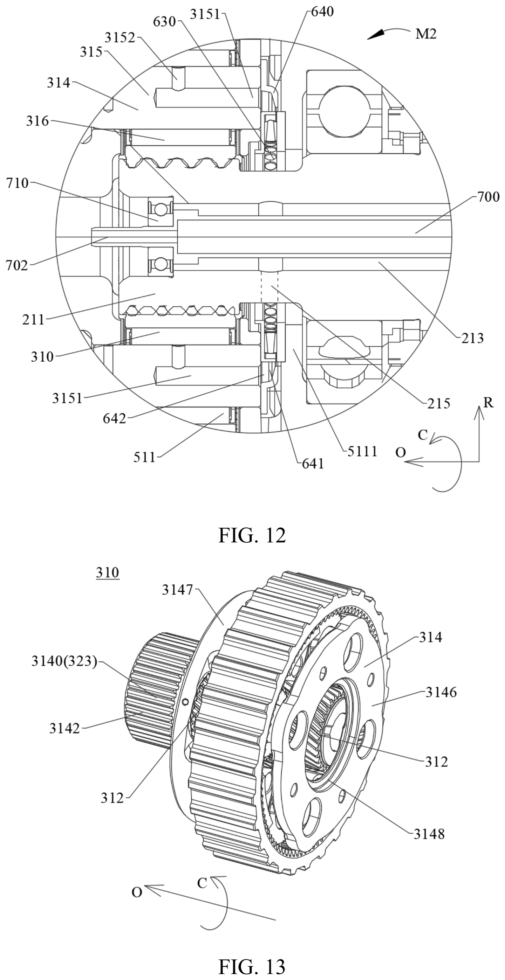

FIG. 12 is a partially enlarged view of an M2 part of the planetary reducer 300 and the motor shaft 210 in FIG. 4.

In an embodiment, as shown in FIG. 4, FIG. 8, and FIG. 12, an inner peripheral wall 5114 of the groove 511 includes a first segment 5115 and a second segment 5116. The first segment 5115 is configured to fasten a ring gear 313 of the planetary gear set 310. The ring gear 313 is configured to engage with a plurality of planet gears 312 of the planetary gear set 310. Space inside the second segment 5116 is used to accommodate a needle roller thrust bearing 630 and a part of the planet carrier 314 of the planetary gear set 310. The needle roller thrust bearing 630 is configured to rotatably connect the planet carrier 314 of the planetary gear set 310 and the first housing 510. As shown in FIG. 3 and FIG. 4, the first segment 5115, the second segment 5116, and the rotor 230 of the drive motor 200 are sequentially arranged in the axial direction O of the powertrain 20. As shown in FIG. 8, in the radial direction R of the powertrain 20, an inner diameter of the second segment 5116 is less than an inner diameter of the first segment 5115.

In this embodiment of this application, the first segment 5115 is configured to fasten the ring gear 313 of the planetary gear set 310, and the ring gear 313 is configured to engage with the plurality of planet gears 312 of the planetary gear set 310, so that the plurality of planet gears 312 of the planetary gear set 310 can normally rotate in the first housing 510. The needle roller thrust bearing 630 is configured to rotatably connect the planet carrier of the planetary gear set 310 and the first housing 510, so that the planet carrier 314 of the planetary gear set 310 can rotate in the first housing 510. This helps ensure normal operation of the planetary reducer 300.

In this embodiment of this application, the first segment 5115, the second segment 5116, and the rotor 230 of the drive motor 200 are sequentially arranged in the axial direction O of the powertrain 20. In this way, it is convenient for the needle roller thrust bearing 630 accommodated in the space inside the second segment 5116 to rotatably connect the planet carrier 314 of the planetary gear set 310 and the first housing 510.

In this embodiment of this application, in the radial direction R of the powertrain 20, the inner diameter of the second segment 5116 is less than the inner diameter of the first segment 5115. As the groove 511 is recessed toward the end winding 2220, the inner diameter of the second segment 5116 is small, so that the second segment 5116 of the groove 511 can extend into the inner side area 2221 surrounded by the end winding 2220. The inner diameter of the first segment 5115 is greater, and the first segment 5115 is farther away from the rotor 230 of the drive motor 200 than the second segment 5116 in the axial direction O of the powertrain 20, so that the first segment 5115 has larger space to accommodate the planetary gear set 310.

In an embodiment, as shown in FIG. 8 and FIG. 9, in the radial direction R of the powertrain 20, the inner diameter of the second segment 5116 is less than the inner diameter of the first segment 5115, and more space may be reserved for the outgoing copper bar 240 to extend, from the end winding 2220, away from the stator core 221, so that the powertrain 20 has a compact structure and components are not interfered with each other.

In an embodiment, as shown in FIG. 4, FIG. 6, and FIG. 8, the second housing 520 is configured to enclose the groove opening 5110 of the groove 511, and the second housing 520 is recessed away from the first housing 510 in the axial direction O of the powertrain 20. The second housing 520 is configured to accommodate the another planetary gear set 320 of the planetary reducer 300. As shown in FIG. 4, the first housing 510 further includes a planet bearing groove 515, and the planet bearing groove 515 is configured to accommodate a planet carrier bearing 5151. An inner ring of the planet carrier bearing 5151 is configured to be fastened to an inner groove wall of the planet bearing groove 515, and an outer ring of the planet carrier bearing 5151 is configured to be fastened to the planet carrier 321 of the another planetary gear set 320. In the axial direction O of the powertrain 20, a groove opening of the planet bearing groove 515 faces the second housing 520. In the circumferential direction C of the powertrain 20, the planet bearing groove 515 surrounds an outer circumference of the groove 511. A projection of the planet bearing groove 515 and a projection of the first segment 5115 partially overlap in the radial direction R of the powertrain 20.

In this embodiment of this application, the second housing 520 is recessed away from the first housing 510 in the axial direction O of the powertrain 20, so that the second housing 520 has sufficient axial space to accommodate the another planetary gear set 320 of the planetary reducer 300.

In this embodiment of this application, the first housing 510 further includes the planet bearing groove 515, the planet bearing groove 515 is configured to accommodate the planet carrier bearing 5151, the inner ring of the planet carrier bearing 5151 is configured to be fastened to the inner groove wall of the planet bearing groove 515, and the outer ring of the planet carrier bearing 5151 is configured to be fastened to the planet carrier 321 of the another planetary gear set 320. In this way, the planet carrier 321 may rotate through the planet carrier bearing 5151, to drive a plurality of planet gears 324 in the another planetary gear set 320 to rotate.

In this embodiment of this application, in the axial direction O of the powertrain 20, the groove opening of the planet bearing groove 515 faces the second housing 520. In this way, it is convenient to mount the planet carrier bearing 5151 in a groove opening direction of the planet bearing groove 515. In the circumferential direction C of the powertrain 20, the planet bearing groove 515 surrounds an outer circumference of the groove 511, and the groove 511 is configured to accommodate the planetary gear set 310 of the planetary reducer 300, so that the planet carrier bearing 5151 may be disposed around the outer circumference of the planetary gear set 310. The projection of the planet bearing groove 515 and the projection of the first segment 5115 may partially overlap in the radial direction R of the powertrain 20, so that a projection of the planet carrier bearing 5151 and a projection of the planetary gear set 310 partially overlap in the radial direction R of the powertrain 20. In other words, the planet carrier bearing 5151 may be arranged to use a part of space, in the axial direction O of the powertrain 20, of the planetary gear set 310, so that the planet carrier bearing 5151 and the planetary gear set 310 are compactly arranged in the axial direction, and the axial size of the planetary reducer 300 is small. This helps shorten the axial size of the powertrain 20.

In an embodiment, the planet carrier bearing 5151 is a ball bearing or a needle roller bearing.

In an embodiment, as shown in FIG. 3, in the axial direction O of the powertrain 20, the planet bearing groove 515 is embedded in space between the opening 401 of the motor housing 400 and the end winding 2220. In the axial direction O of the powertrain 20, the groove 511 is embedded in space between the opening 401 of the motor housing 400 and the rotor 230 of the drive motor 200.

In this embodiment of this application, in the circumferential direction C of the powertrain 20, the planet bearing groove 515 surrounds the outer circumference of the groove 511, so that the planet bearing groove 515 occupies space of the outer circumference of the groove 511, and the groove 511 is recessed toward the inner side area 2221 surrounded by the end winding 2220. In the axial direction O of the powertrain 20, the planet bearing groove 515 is embedded in the space between the opening 401 of the motor housing 400 and the end winding 2220, so that interference between a part of the first housing 510 corresponding to the planet bearing groove 515 and the end winding 2220 can be avoided. In this way, the planet bearing groove 515 and the end winding 2220 are arranged opposite to each other in the axial direction O of the powertrain 20, so that the planet carrier bearing 5151 and the end winding 2220 are arranged along an axis, and the space between the opening 401 of the motor housing 400 and the end winding 2220 may be fully used to accommodate the first segment 5115 and the second segment 5116 of the groove 511.

In this embodiment of this application, in the axial direction O of the powertrain 20, the groove 511 is embedded in the space between the opening 401 of the motor housing 400 and the rotor 230 of the drive motor 200. In this way, the first segment 5115 and the second segment 5116 of the groove 511 may be arranged to fully use the space between the opening 401 of the motor housing 400 and the rotor 230 of the drive motor 200, and the planetary reducer 300 is arranged closer to the rotor 230 of the drive motor 200. This helps reduce the axial size of the powertrain 20.

In an embodiment, as shown in FIG. 3, in the radial direction R of the powertrain 20, an inner diameter of the outer peripheral wall of the planet bearing groove 515 is greater than the inner diameter of the end winding 2220. In the axial direction O of the powertrain 20, a groove depth of the planet bearing groove 515 is less than the spacing between the opening 401 of the motor housing 400 and the end winding 2220.

In this embodiment of this application, in the radial direction R of the powertrain 20, the inner diameter of the outer peripheral wall of the planet bearing groove 515 is greater than the inner diameter of the end winding 2220, and in the axial direction O of the powertrain 20, the first housing 510 is recessed toward the inner side area 2221 surrounded by the end winding 2220 to form the groove 511. In this way, the planet bearing groove 515 may be disposed around the outer circumference of the groove 511 in the circumferential direction C of the powertrain 20. A projection of the planet carrier bearing 5151 in the planet bearing groove 515 and a projection of the planetary gear set 310 in the groove 511 partially overlap in the radial direction R of the powertrain 20, so that the planetary reducer 300 has a smaller axial size. This helps reduce the axial size of the powertrain 20.

In this embodiment of this application, in the axial direction O of the powertrain 20, the groove depth of the planet bearing groove 515 is less than the spacing between the opening 401 of the motor housing 400 and the end winding 2220, so that the planet bearing groove 515 may be accommodated in the space between the opening 401 of the motor housing 400 and the end winding 2220 in the axial direction O of the powertrain 20. In this way, the planet carrier bearing 5151 may be arranged to use a part of the axial space of the motor housing 400.

In an embodiment, as shown in FIG. 3 and FIG. 4, an outer diameter of the ring gear 313 of the first-stage planetary gear set 310 is less than or equal to an inner diameter of the central hole 223 of the motor stator 220, and an outer diameter of the ring gear 322 of the second-stage planetary gear set 320 is greater than the inner diameter of the central hole 223 of the motor stator 220 and less than or equal to an outer diameter of the motor stator 220.

In this embodiment of this application, the outer diameter of the ring gear 313 of the first-stage planetary gear set 310 is less than or equal to the inner diameter of the central hole 223 of the motor stator 220, and the outer diameter of the ring gear 313 of the first-stage planetary gear set 310 is small, so that the first-stage planetary gear set 310 may be arranged inside the motor housing 400, and it is more convenient to extend a part of the reducer housing 500 that accommodates the first-stage planetary gear set 310 into the motor housing 400. This helps reduce the axial size of the powertrain 20. The inner diameter of the central hole 223 of the motor stator 220 is large, so that the part of the reducer housing 500 extending into the motor housing 400 may be accommodated, and the planetary coaxial reducer 300 and the motor stator 220 are compactly arranged. This helps shorten the axial size of the powertrain 20.

In this embodiment of this application, as the first-stage planetary gear set 310 needs to be embedded in the motor housing 400, the outer diameter of the ring gear 313 of the first-stage planetary gear set 310 is small, and a deceleration degree of the planetary coaxial reducer 300 is insufficient. To ensure normal driving of the electric vehicle 1, a large second-stage planetary gear set 320 is required for deceleration. The outer diameter of the ring gear 322 of the second-stage planetary gear set 320 is greater than the inner diameter of the central hole 223 of the motor stator 220 and less than or equal to the outer diameter of the motor stator 220, so that the second-stage planetary gear set 320 has a large outer diameter, and can further reduce power for transmission of the first-stage planetary gear set 310. The ring gear 322 of the second-stage planetary gear set 320 has a large outer diameter, and cannot be accommodated in the motor housing 400. Therefore, the second-stage planetary gear set 320 needs to be arranged on an outer side of the motor housing 400.

In an embodiment, as shown in FIG. 3 and FIG. 4, the outer diameter of the ring gear 313 of the first-stage planetary gear set 310 is less than or equal to an outer diameter of an outer circumferential surface surrounded by the end winding 2220, and the outer diameter of the ring gear 322 of the second-stage planetary gear set 320 is greater than the outer diameter of the outer circumferential surface surrounded by the end winding 2220 and less than or equal to the outer diameter of the motor stator 220.

In this embodiment of this application, the outer diameter of the ring gear 313 of the first-stage planetary gear set 310 is less than or equal to the outer diameter of the outer circumferential surface surrounded by the end winding 2220, so that the first-stage planetary gear set 310 is small, and the first-stage planetary gear set 310 can extend into the motor housing 400 for arrangement. In addition, a part of the reducer housing 500 configured to accommodate the first-stage planetary gear set 310 can extend into the inner side of the end winding 2220, so that a part of axial space inside the end winding 2220 can be reused, to arrange the first-stage planetary gear set 310 and the drive motor 200 more compactly. This helps shorten the axial space of the powertrain 20.

In this embodiment of this application, the outer diameter of the ring gear 322 of the second-stage planetary gear set 320 is greater than the outer diameter of the outer circumferential surface surrounded by the end winding 2220 and less than or equal to the outer diameter of the motor stator 220, so that the outer diameter of the ring gear 322 of the second-stage planetary gear set 320 is large. In this way, the second-stage planetary gear set 320 has a large outer diameter, and can further reduce the power for transmission of the first-stage planetary gear set 310, to meet a deceleration requirement of the entire vehicle. In addition, the ring gear 322 of the second-stage planetary gear set 320 has a large outer diameter, and cannot be mounted into the end winding 2220 in the motor housing 400. Therefore, the second-stage planetary gear set 320 needs to be arranged on an outer side of the motor housing 400.

In an embodiment, as shown in FIG. 8, an inner wall of the groove 511 includes one annular protrusion 517. As shown in FIG. 4 and FIG. 6, an inner circumferential surface of the one annular protrusion 517 is configured to fasten the ring gear 313 of the first-stage planetary gear set 310, and an outer circumferential surface of the one annular protrusion 517 is configured to fasten one bearing 5151 of the planet carrier 321 of the second-stage planetary gear set 320.

In this embodiment of this application, the inner circumferential surface of the one annular protrusion 517 is configured to fasten the ring gear 313 of the first-stage planetary gear set 310, and the outer circumferential surface of the annular protrusion 517 is configured to fasten the one bearing 5151 of the planet carrier 321 of the second-stage planetary gear set 320. In this way, the one bearing 5151 of the planet carrier 321 of the second-stage planetary gear set 320 can be disposed around the outer circumference of the ring gear 313 of the first-stage planetary gear set 310 in the circumferential direction C of the powertrain 20. The one bearing 5151 of the planet carrier 321 of the second-stage planetary gear set 320 may be arranged to use space of the ring gear 313 of the first-stage planetary gear set 310 in the radial direction R of the powertrain 20, and the one bearing 5151 of the planet carrier 321 of the second-stage planetary gear set 320 may be arranged to reuse the space of the ring gear 313 of the first-stage planetary gear set 310 in the axial direction O of the powertrain 20. In this way, the first-stage planetary gear set 310 and the second-stage planetary gear set 320 of the planetary coaxial reducer 300 are compact in structural arrangement and high in degree of integration. This helps shorten the axial size of the powertrain 20, helps miniaturizes of the powertrain 20, and optimizes a layout of the powertrain 20 in the vehicle.

In an embodiment, the annular protrusion 517 is configured to form a part of a groove wall of the planet bearing groove 515, and the one bearing 5151 of the planet carrier 321 of the second-stage planetary gear set 320 is the planet carrier bearing 5151 accommodated in the planet bearing groove 515.

In an embodiment, as shown in FIG. 4, one end 3142 of the planet carrier 314 of the first-stage planetary gear set 310 is configured to fasten the sun gear 323 of the second-stage planetary gear set 320, and the central hole 3141 of the planet carrier 314 of the first-stage planetary gear set 310 is configured to accommodate another bearing 3212 of the planet carrier 321 of the second-stage planetary gear set 320.

In this embodiment of this application, the one end 3142 of the planet carrier 314 of the first-stage planetary gear set 310 is configured to fasten the sun gear 323 of the second-stage planetary gear set 320. In this way, the first-stage planetary gear set 310 can transmit power to the sun gear 323 of the second-stage planetary gear set 320 through the planet carrier 314 of the first-stage planetary gear set 310, to achieve further deceleration.

In this embodiment of this application, the central hole 3141 of the planet carrier 314 of the first-stage planetary gear set 310 is configured to accommodate the another bearing 3212 of the planet carrier 321 of the second-stage planetary gear set 320. The another bearing 3212 of the planet carrier 321 of the second-stage planetary gear set 320 is arranged in the central hole 3141 of the planet carrier 314 of the first-stage planetary gear set 310. Axial space of the central hole 3141 of the planet carrier 314 of the first-stage planetary gear set 310 is used, so that the first-stage planetary gear set 310 is arranged more compactly with the second-stage planetary gear set 320. This helps reduce the axial size of the powertrain 20, and can optimize a layout of the powertrain 20 in the entire vehicle.

In an embodiment, as shown in FIG. 3 and FIG. 4, the planet carrier 314 of the first-stage planetary gear set 310 includes a fastening protrusion 3140. The fastening protrusion 3140 protrudes away from the drive motor 200. A spline on an outer circumferential surface of the fastening protrusion 3140 is configured to be in a transmission connection to the sun gear 323 of the second-stage planetary gear set 320. A central hole 3141 is provided on an inner side of the fastening protrusion 3140, and is configured to accommodate the another bearing 3212 of the planet carrier 321 of the second-stage planetary gear set 320.

In this embodiment of this application, the planet carrier 314 of the first-stage planetary gear set 310 includes the fastening protrusion 3140, and the fastening protrusion 3140 protrudes away from the drive motor 200, so that the planet carrier 314 of the first-stage planetary gear set 310 may be configured to fasten the sun gear 323 of the second-stage planetary gear set 320. In this way, the first-stage planetary gear set 310 and the second-stage planetary gear set 320 can be arranged in the axial direction O of the powertrain 20 and have a compact structure arrangement. This helps reduce the axial size of the powertrain 20.

In this embodiment of this application, the spline on the outer circumferential surface of the fastening protrusion 3140 is configured to be in a transmission connection to the sun gear 323 of the second-stage planetary gear set 320. In this way, a projection of the sun gear 323 of the second-stage planetary gear set 320 and a projection of the fastening protrusion 3140 of the planet carrier 314 of the first-stage planetary gear set 310 may partially overlap in the radial direction R of the powertrain 20, so that the first-stage planetary gear set 310 and the second-stage planetary gear set 320 have a compact structure arrangement. The central hole 3141 is provided on the inner side of the fastening protrusion 3140, and is configured to accommodate the another bearing 3212 of the planet carrier 321 of the second-stage planetary gear set 320, so that the another bearing 3212 of the planet carrier 321 of the second-stage planetary gear set 320 does not need to additionally occupy axial space of the sun gear 323 of the second-stage planetary gear set 320. This helps reduce the axial size of the powertrain 20, and optimizes a layout of the powertrain 20 in the entire vehicle.

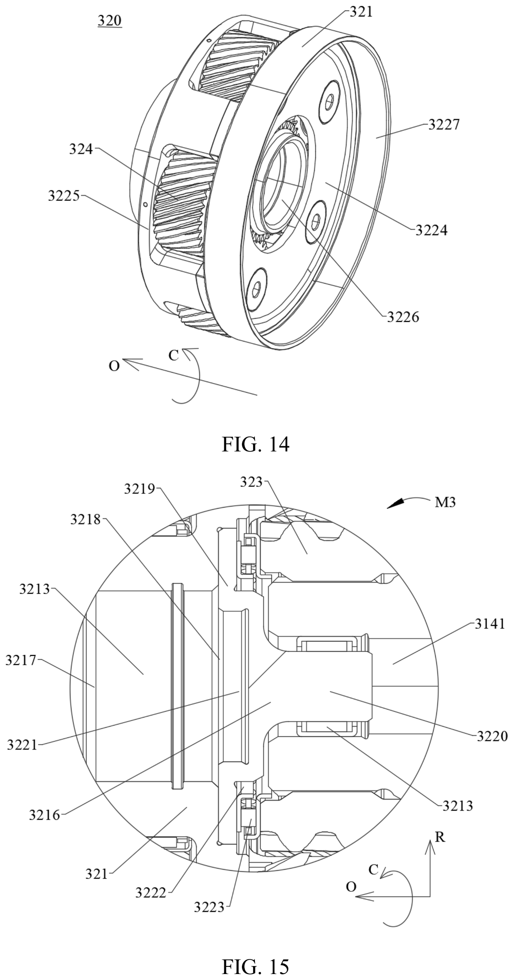

FIG. 13 is a diagram of the first-stage planetary gear set 310 according to an embodiment of this application; and FIG. 14 is a diagram of the second-stage planetary gear set 320 according to an embodiment of this application.

In an embodiment, as shown in FIG. 13, the planet carrier 314 of the first-stage planetary gear set 310 includes two end plates 3146 and 3147. The two end plates 3146 and 3147 are arranged opposite to each other in the axial direction O of the powertrain 20. Space between the two end plates 3146 and 3147 is configured to accommodate the planet gear 312 of the first-stage planetary gear set 310. One end plate 3146 includes a through hole 3148. As shown in FIG. 4 and FIG. 13, one end 211 of the motor shaft 210 extends into the space between the two end plates 3146 and 3147 through the through hole 3148. A plurality of teeth 214 of the motor shaft 210 are located between the two end plates 3146 and 3147. The other end plate 3147 includes a fastening protrusion 3140. The fastening protrusion 3140 protrudes away from the motor shaft 210 in the axial direction O of the powertrain 20. The fastening protrusion 3140 is configured to be sleeved on and in a transmission connection to the sun gear 323 of the second-stage planetary gear set 320. The two end plates 3146 and 3147 have a plurality of holes (not shown) through which the planetary shaft 315 of the first-stage planetary gear set 310 penetrates. The plurality of holes are distributed around the through hole 3148.

In this embodiment of this application, the sun gear 323 of the second-stage planetary gear set 320 is sleeved and fastened by integrally forming the fastening protrusion 3140 on the planet carrier 314 of the first-stage planetary gear set 310, so that structures of the first-stage planetary gear set 310 and the second-stage planetary gear set 320 are compact. This helps shorten the axial size of the planetary coaxial reducer 300, and further helps shorten the axial size of the powertrain 20. In addition, a transmission structure between the first-stage planetary gear set 310 and the second-stage planetary gear set 320 is simplified, which helps improve transmission stability.

In an embodiment, as shown in FIG. 14, the planet carrier 321 of the second-stage planetary gear set 320 includes two end plates 3224 and 3225. The two end plates 3224 and 3225 are arranged opposite to each other in the axial direction O of the powertrain 20. The two end plates 3224 and 3225 are connected to each other through a plurality of connecting plates. Space between the two end plates 3224 and 3225 is configured to accommodate the planet gear 324 of the second-stage planetary gear set 320. One end plate 3224 includes a through hole 3226. As shown in FIG. 4 and FIG. 14, the fastening protrusion 3140 of the planet carrier 314 of the first-stage planetary gear set 310 extends into the space between the two end plates 3224 and 3225 through the through hole 3226. The one end plate 3224 further includes a fastening protrusion 3227. The fastening protrusion 3227 protrudes toward the motor shaft 210 in the axial direction O of the powertrain 20. The fastening protrusion 3227 is configured to be sleeved on and in a transmission connection to one bearing 5151 of the planet carrier 321 of the second-stage planetary gear set 320.

In this embodiment of this application, the fastening protrusion 3140 of the planet carrier 314 of the first-stage planetary gear set 310 extends into the space between the two end plates 3224 and 3225 through the through hole 3226, so that structures of the planet carrier 314 of the first-stage planetary gear set 310 and the planet carrier 321 of the second-stage planetary gear set 320 are compact. This helps reduce the axial size of the planetary coaxial reducer 300.

In this embodiment of this application, the one end plate 3224 further includes the fastening protrusion 3227. The fastening protrusion 3227 protrudes toward the motor shaft 210 in the axial direction O of the powertrain 20. The fastening protrusion 3227 is configured to be sleeved on and in a transmission connection to the one bearing 5151 of the planet carrier 321 of the second-stage planetary gear set 320, so that the planet carrier 321 of the second-stage planetary gear set 320 can be in a transmission connection to the one bearing 5151 of the planet carrier 321 of the second-stage planetary gear set 320 that is fastened to the outer circumferential surface of the annular protrusion 517. The annular protrusion 517 is configured to fasten an inner ring of the bearing 5151, and the fastening protrusion 3227 is configured to fasten an outer ring of the bearing 5151.

In an embodiment, as shown in FIG. 5 to FIG. 8, the groove 511 formed by recessing the first housing 510 of the reducer housing 500 in a direction facing the drive motor 200 on one side that is of the first housing 510 and that is away from the drive motor 200 is denoted as a first groove 511.

In an embodiment, as shown in FIG. 6 to FIG. 8, the first housing 510 includes two mounting surfaces 518 and 519. The two mounting surfaces 518 and 519 are opposite to each other in the axial direction O of the drive motor 200. One mounting surface 518 of the two mounting surfaces 518 and 519 is configured to connect to a mounting surface 440 of the motor housing 400. The other mounting surface 519 of the two mounting surfaces 518 and 519 is configured to connect to a mounting surface 521 of the second housing 520. The first groove 511 is recessed toward the drive motor 200 from an inner side surrounded by the other mounting surface 519 in the axial direction O of the powertrain 20.

In this embodiment of this application, the first housing 510 includes the two mounting surfaces 518 and 519, and the two mounting surfaces 518 and 519 are opposite to each other in the axial direction O of the drive motor 200. In this way, the first housing 510 may be separately fastened to the mounting surface 440 of the motor housing 400 and the mounting surface 521 of the second housing 520.

In this embodiment of this application, in the axial direction O of the powertrain 20, the first groove 511 is recessed toward the drive motor 200 from the inner side surrounded by the other mounting surface 519, so that the first housing 510 may use axial space inside the motor housing 400, and the first housing 510 occupies small axial space outside the motor housing 400. This helps reduce an overall axial size of the planetary coaxial reducer 300 and the drive motor 200, and helps shorten an axial length of the powertrain 20.

In an embodiment, as shown in FIG. 6 to FIG. 8, the two mounting surfaces 518 and 519 of the first housing 510, the mounting surface 440 of the motor housing 400, and the mounting surface 521 of the second housing 520 are planes. In another embodiment, the two mounting surfaces 518 and 519 of the first housing 510, the mounting surface 440 of the motor housing 400, and the mounting surface 521 of the second housing 520 are curved surfaces in concave-convex fit, provided that the one mounting surface 518 and the mounting surface 440 of the motor housing 400 fit each other to achieve sealing, and the other mounting surface 519 and the mounting surface 521 of the second housing 520 fit each other to achieve sealing.

In an embodiment, as shown in FIG. 3 and FIG. 6, the second housing 520 is recessed in a direction away from the drive motor 200 to form a second groove 522 on one side that is of the second housing 520 and that faces the drive motor 200. An inner wall of the second groove 522 is configured to fasten the ring gear 322 of the second-stage planetary gear set 320.

In this embodiment of this application, the second housing 520 is recessed in the direction away from the drive motor 200 to form the second groove 522 on the one side that is of the second housing 520 and that faces the drive motor 200, so that the second housing 520 has sufficient space in the axial direction O of the powertrain 20 to accommodate the second-stage planetary gear set 320. The inner wall of the second groove 522 is configured to fasten the ring gear 322 of the second-stage planetary gear set 320, so that the planet gear of the second-stage planetary gear set 320 can cooperate with the ring gear 322 fastened to the inner wall of the second groove 522. In this way, the second-stage planetary gear set 320 can rotate in the second housing 520 without being interfered by the second housing 520.

In this embodiment of this application, the ring gear 322 of the second-stage planetary gear set 320 is fastened in the second housing 520, so that when the mounting surface 521 of the second housing 520 is mounted on the other mounting surface 519 of the first housing 510, the ring gear 322 of the second-stage planetary gear set 320 can be directly assembled with the planet gear 324 of the second-stage planetary gear set 320. This simplifies an assembly process.

In an embodiment, as shown in FIG. 2 and FIG. 4, the second housing 520 includes a shaft hole 523. The shaft hole 523 connects the inside and outside of the reducer housing 500 in the axial direction O of the drive motor 200. The shaft hole 523 is configured to accommodate one end of the planet carrier 321 of the second-stage planetary gear set 320. The one end of the planet carrier 321 of the second-stage planetary gear set 320 includes an internal spline, and the internal spline is configured to be in a transmission connection to the half shaft 50 of the electric vehicle 1. The half shaft 50 of the electric vehicle 1 is configured to drive the wheel 40 of the electric vehicle 1.

In this embodiment of this application, the shaft hole 523 is configured to accommodate the one end of the planet carrier 321 of the second-stage planetary gear set 320. The one end of the planet carrier 321 of the second-stage planetary gear set 320 includes the internal spline, so that the half shaft 50 of the electric vehicle 1 can be directly in a transmission connection to the planet carrier 321 of the second-stage planetary gear set 320 after extending into the inner side of the one end of the planet carrier 321 of the second-stage planetary gear set 320, and transmission between the second-stage planetary gear set 320 and the half shaft 50 of the electric vehicle 1 does not need to be additionally transferred. This may reduce space reserved for assembling the powertrain 20 into the entire vehicle to implement the transmission connection between the powertrain 20 and the half shaft 50 of the electric vehicle 1, and optimizes a layout of the powertrain 20 in the entire vehicle.

In this embodiment of this application, the planet carrier 321 of the second-stage planetary gear set 320 is directly in a transmission connection to the half shaft 50 of the motor vehicle. This further helps reduce radial fluttering and axial fluttering of the half shaft 50 of the electric vehicle 1 in a transmission process, and helps improve NVH performance of the entire vehicle.

In an embodiment, as shown in FIG. 4, the planet carrier 321 of the second-stage planetary gear set 320 includes a half shaft protrusion 3210. The half shaft protrusion 3210 protrudes away from the first-stage planetary gear set 310 in the axial direction O of the powertrain 20. The half shaft protrusion 3210 is configured to penetrate the shaft hole 523, and the half shaft protrusion 3210 has an internal spline.

In this embodiment of this application, as shown in FIG. 2 and FIG. 4, the planet carrier 321 of the second-stage planetary gear set 320 includes the half shaft protrusion 3210. The half shaft protrusion 3210 protrudes away from the first-stage planetary gear set 310 in the axial direction O of the powertrain 20, so that there is space inside one end of the planet carrier 321 of the second-stage planetary gear set 320 to arrange the internal spline, and the half shaft 50 of the electric vehicle 1 can extend into the one end of the planet carrier 321 of the second-stage planetary gear set 320 to be in a transmission connection to the internal spline. The half shaft protrusion 3210 protrudes away from the first-stage planetary gear set 310 in the axial direction O of the powertrain 20, so that it may be convenient for the half shaft protrusion 3210 to penetrate the shaft hole 523 of the second housing 520. In this way, the internal spline of the half shaft protrusion 3210 can be in a transmission connection to the half shaft 50 of the electric vehicle 1 more smoothly.

In an embodiment, an oil seal 330 is disposed between the second housing 520 and the half shaft protrusion 3210 to seal a gap between the second housing 520 and the half shaft protrusion 3210, to avoid oil leakage.

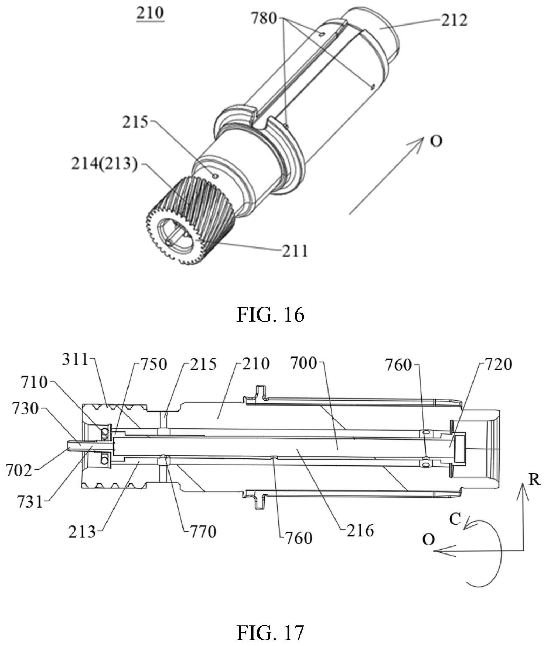

FIG. 16 is a diagram of the motor shaft 210 according to an embodiment of this application.

In an embodiment, as shown in FIG. 3 and FIG. 4, the reducer housing 500 includes a through hole 516, and the through hole 516 is configured to connect an inner cavity of the reducer housing 500 and an inner cavity of the motor housing 400. In the axial direction O of the powertrain 20, one end 211 of the motor shaft 210 extends into the inner cavity of the reducer housing 500 from the through hole 516. As shown in FIG. 4 and FIG. 16, the one end 211 of the motor shaft 210 is configured to serve as the sun gear 311 of the one planetary gear set 310.

In this embodiment of this application, the reducer housing 500 includes the through hole 516, and the through hole 516 is configured to connect the inner cavity of the reducer housing 500 and the inner cavity of the motor housing 400. In this way, the motor shaft 210 can penetrate the through hole 516 and be disposed in both the inner cavity of the motor housing 400 and the inner cavity of the reducer housing 500.

In this embodiment of this application, the one end 211 of the motor shaft 210 extends into the inner cavity of the reducer housing 500 from the through hole 516 in the axial direction O of the powertrain 20, and the one end 211 of the motor shaft 210 is configured to serve as the sun gear 311 of the one planetary gear set 310, so that the rotor 230 of the drive motor 200 can directly transmit power to the planet gear 312 of the one planetary gear set 310 of the planetary reducer 300 through the one end 211 of the motor shaft 210. In this way, a degree of integration between the drive motor 200 and the planetary reducer 300 is higher, and a transmission process between the drive motor 200 and the planetary reducer 300 is more stable. This helps improve reliability of the powertrain 20. Compared with enabling the sun gear 311 of the one planetary gear set 310 to be in a transmission connection to the motor shaft 210 through a spline, using the one end 211 of the motor shaft 210 as the sun gear 311 of the one planetary gear set 310 to directly receive power from the rotor 230 of the drive motor 200 can integrate the motor shaft 210 of the drive motor 200 with an input shaft of the planetary reducer 300. This helps improve a bending resistance capability of the motor shaft 210, and further increases a critical rotation speed of the rotor 230 of the drive motor 200.

In an embodiment, as shown in FIG. 4 and FIG. 5, the first housing 510 includes a through hole 516. The through hole 516 penetrates the first housing 510 in the axial direction O of the motor shaft 210, and the one end 211 of the motor shaft 210 penetrates the through hole 516. The one end 211 of the motor shaft 210 that penetrates the through hole 516 extends into the groove 511 and serves as the sun gear 311 to engage with a plurality of planet gears 312 of the planetary gear set 310.

In this embodiment of this application, the through hole 516 penetrates the first housing 510 in the axial direction O of the motor shaft 210, so that the one end 211 of the motor shaft 210 may penetrate the first housing 510 through the through hole 516.

In this embodiment of this application, the first housing 510 is recessed toward the end winding 2220, so that the planetary reducer 300 is close to the rotor 230 of the drive motor 200. The one end 211 of the motor shaft 210 of an integral shaft serves as the sun gear 311, so that an axial length of a part that is of the sun gear 311 and the motor shaft 210 can be shortened. This helps reduce the axial size of the powertrain 20. In this way, a path for transmitting power output by the rotor 230 of the drive motor 200 to the planetary gear set of the planetary reducer 300 is shorter, so that power transmission is more stable and the critical rotation speed of the drive motor is increased. In this embodiment of this application, the sun gear 311 and the motor shaft 210 are of an integrated structure, and the one end 211, with the sun gear 311, of the motor shaft 210 extends into the groove 511, and may be directly in a transmission connection to a plurality of planet gears 312 of the planetary gear set 310 in the groove 511, without additionally occupying an axial size of the first housing 510. This helps further shorten the axial size of the powertrain 20.

The axial direction O of the motor shaft 210 is the same as the axial direction O of the powertrain 20.

In an embodiment, as shown in FIG. 3, in the axial direction O of the powertrain 20, a spacing between the sun gear 311 and the rotor 230 of the drive motor 200 is less than a spacing between the opening 401 of the motor housing 400 and the rotor 230 of the drive motor 200.

In this embodiment of this application, in the axial direction O of the powertrain 20, the spacing between the sun gear 311 and the rotor 230 of the drive motor 200 is less than the spacing between the opening 401 of the motor housing 400 and the rotor 230 of the drive motor 200, so that the sun gear 311 in the planetary reducer 300 is arranged to use a part of axial space of the motor housing 400. This helps shorten the axial size of the powertrain 20. In addition, it is more convenient for the sun gear 311 to be directly in a transmission connection to the plurality of planet gears 312 of the planetary gear set 310 in the groove 511 arranged between the opening 401 of the motor housing 400 and the rotor 230 of the drive motor 200, so that a transmission process is more stable.

In an embodiment, as shown in FIG. 4 and FIG. 16, an outer circumferential surface of the one end 211 of the motor shaft 210 includes a plurality of teeth 214. The plurality of teeth 214 are configured to: engage with and drive the planet gears 312 of the one planetary gear set 310.

In this embodiment of this application, the outer circumferential surface of the one end 211 of the motor shaft 210 includes the plurality of teeth 214, so that the one end 211 of the motor shaft 210 may form the sun gear 311 of the one planetary gear set 310. The plurality of teeth 214 are configured: engage with and drive the planet gears 312 of the one planetary gear set 310, so that the one end 211 of the motor shaft 210 can be directly in a transmission connection to the planetary reducer 300, and no additional spline is required for transmission between the drive motor 200 and the planetary reducer 300. In this way, the planetary reducer 300 may directly receive power of the motor shaft 210. This facilitates a more stable transmission process, and helps increase the critical rotation speed of the rotor 230. The sun gear 311 is formed by using the one end 211 of the motor shaft 210, so that the degree of integration of a transmission structure between the drive motor 200 and the planetary reducer 300 is higher, enhancing stability of the powertrain 20.

FIG. 17 is a sectional view of the motor shaft 210 and the oil guide pipe 700 according to an embodiment of this application.

In an embodiment, as shown in FIG. 4 and FIG. 17, an outer diameter of the sun gear 311 of the motor shaft 210 is less than an outer diameter of a part of the motor shaft 210 used to fasten the rotor 230.

In this embodiment of this application, if the rotor 230 of the drive motor 200 is heavy, the outer diameter of the part that is of the motor shaft 210 and that is configured to fasten the rotor 230 is set to be large, so that the motor bearing 5141 carries the heavy rotor 230. If the planet gear 312 of one planetary gear set 310 is light, the outer diameter of the sun gear 311 of the motor shaft 210 is set to be small, so that the planet gear 312 of the one planetary gear set 310 may be carried. In this way, overall carrying force of the motor shaft 210 is more balanced and stable.

In this embodiment of this application, the outer diameter of the sun gear 311 of the motor shaft 210 is small, so that it is convenient for the one end 211 of the motor shaft 210 on which the sun gear 311 is located to extend into the inner cavity of the reducer housing 500 from the through hole 516 of the reducer housing 500. The outer diameter of the sun gear 311 of the motor shaft 210 is less than the outer diameter of the part that is of the motor shaft 210 and that is configured to fasten the rotor 230, so that the part that is of the motor shaft 210 and that is configured to fasten the rotor 230 cannot penetrate the through hole 516 of the reducer housing 500, and the motor shaft 210 can be axially limited through the reducer housing 500. This helps reduce axial fluttering of the motor shaft 210, makes transmission of the motor shaft 210 more stable, and helps increase the critical rotation speed of the motor rotor 230.

In this embodiment of this application, as shown in FIG. 3 and FIG. 4, the outer diameter of the sun gear 311 of the motor shaft 210 is small, and the one planetary gear set 310 of the planetary reducer 300 is also small. This helps arrange the one planetary gear set 310 close to the rotor 230 of the drive motor 200 in the motor housing 400. In this way, the one planetary gear set 310 is arranged in the motor housing 400, and space of the motor housing 400 is fully utilized, so that an axial size of the powertrain 20 is small, and miniaturization of the powertrain 20 is facilitated.

In an embodiment, as shown in FIG. 4, FIG. 5, and FIG. 9, the reducer housing 500 further includes a motor shaft bearing groove 514. The motor shaft bearing groove 514 is configured to accommodate a bearing 5141 of the motor shaft 210. A groove opening 5142 of the motor shaft bearing groove 514 faces the rotor 230 in the axial direction O of the powertrain 20. The end winding 2220 of the stator 220 is located in the inner cavity of the motor housing 400. The end winding 2220 surrounds an outer circumference of the motor shaft bearing groove 514. The through hole 516 penetrates a groove bottom of the motor shaft bearing groove 514 in the axial direction O of the powertrain 20. The one end 211 of the motor shaft 210 penetrates the through hole 516 from the motor shaft bearing groove 514, and extends into the inner cavity of the reducer housing 500.

In this embodiment of this application, the through hole 516 penetrates the groove bottom of the motor shaft bearing groove 514 in the axial direction O of the powertrain 20. The one end 211 of the motor shaft 210 penetrates the through hole 516 from the motor shaft bearing groove 514, and extends into the inner cavity of the reducer housing 500, and the motor shaft 210 extends into the reducer housing 500 from the groove bottom of the motor shaft bearing groove 514 located on the inner side of the end winding 2220. In this way, the bearing 5141 supporting the integrated motor shaft 210 may be close to the rotor 230. This helps shorten the axial size of the motor shaft 210, makes power transmission from the rotor 230 to the sun gear 311 of the one planetary gear set 310 more stable, and helps increase the critical rotation speed of the rotor 230.

In an embodiment, as shown in FIG. 4, a spacing between an end part of the one end 211 of the motor shaft 210 and the bearing 5141 is less than a spacing between an end part of the other end 212 of the motor shaft 210 and the bearing 5141.

In this embodiment of this application, as shown in FIG. 3 and FIG. 4, the spacing between the end part of the one end 211 of the motor shaft 210 and the bearing 5141 is denoted as L3, and the spacing between the end part of the other end 212 of the motor shaft 210 and the bearing 5141 is denoted as L4. L3 is less than L4. L3 is smaller. In this way, the spacing between the sun gear 311 of the one planetary gear set 310 and the bearing 5141 is smaller. This helps the motor shaft 210 transmit power of the rotor 230 of the drive motor 200 to the sun gear 311 of the one planetary gear set 310 more stably, and helps increase the critical rotation speed of the rotor 230. The smaller L3 further helps shorten a length of the motor shaft 210, improve rigidity of the motor shaft 210, and also helps increase the critical rotation speed of the rotor 230. L4 is greater, so that the motor shaft 210 has sufficient space to fasten the rotor 230. This makes power output of the rotor 230 more stable, and helps increase the critical rotation speed.

In an embodiment, as shown in FIG. 4 and FIG. 9, a groove wall of the motor shaft bearing groove 514 is configured to fasten a bearing clamping plate 610. The bearing clamping plate 610 is located between the reducer housing 500 and the rotor 230 in the axial direction O of the powertrain 20. The end winding 2220 of the stator 220 surrounds an outer circumference of the bearing clamping plate 610. The bearing clamping plate 610 is configured to clamp an outer ring of the bearing 5141. The bearing clamping plate 610 and an inner ring of the bearing 5141 are spaced from each other.

In this embodiment of this application, the groove wall of the motor shaft bearing groove 514 is configured to fasten the bearing clamping plate 610, the end winding 2220 surrounds the outer circumference of the motor shaft bearing groove 514, the bearing clamping plate 610 is located between the reducer housing 500 and the rotor 230 in the axial direction O of the powertrain 20, and the end winding 2220 of the stator 220 surrounds the outer circumference of the bearing clamping plate 610. In this way, the bearing clamping plate 610 is arranged without additionally occupying space, in a direction other than the axial direction O of the powertrain 20, of the end winding 2220, and space inside the end winding 2220 is further fully utilized. This helps shorten the axial size of the powertrain 20.

In this embodiment of this application, the bearing clamping plate 610 is configured to clamp the outer ring of the bearing 5141, and the bearing clamping plate 610 and the inner ring of the bearing 5141 are spaced from each other, so that the bearing clamping plate 610 and the reducer housing 500 can axially limit the bearing 5141. In this way, axial fluttering of the bearing 5141 is reduced, and contact rigidity of the bearing 5141 may be further improved, so that stability between the motor shaft 210 and the reducer housing 500 is improved, and power transmission stability is improved. This helps increase the critical rotation speed of the rotor 230.

In an embodiment, the bearing clamping plate 610 may be further configured to fasten a resolver sensor 620, and the bearing clamping plate 610 is also referred to as a sensor bracket 610.

In an embodiment, as shown in FIG. 9, the bearing clamping plate 610 and the inner ring of the bearing 5141 are spaced from each other, so that the stator 621 of the resolver sensor 620 may be arranged in a spaced gap. In this way, space inside the end winding 2220 is fully utilized.

In an embodiment, as shown in FIG. 9, a part of the reducer housing 500 is recessed toward the inner cavity of the motor housing 400 to form the groove 511 on a side that is of the part of the reducer housing 500 and that is away from the drive motor 200. The groove 511 is configured to accommodate the planet gear 312 and the sun gear 311 of the one planetary gear set 310.

In this embodiment of this application, the part of the reducer housing 500 is recessed toward the inner cavity of the motor housing 400 to form the groove 511 on the side that is of the part of the reducer housing 500 and that is away from the drive motor 200, so that the groove 511 formed by the part of the reducer housing 500 may be provided in the motor housing 400. The groove 511 is used to accommodate the planet gear 312 and the sun gear 311 of the one planetary gear set 310, so that the planet gear 312 and the sun gear 311 of the one planetary gear set 310 may be arranged to fully use axial space of the inner cavity of the motor housing 400. In this way, the planet gear 312 and the sun gear 311 of the one planetary gear set 310 are closer to the rotor 230. This helps shorten the axial size of the motor shaft 210, makes transmission of the motor shaft 210 more stable, and helps increase the critical rotation speed of the rotor 230.

In an embodiment, as shown in FIG. 9 and FIG. 13, the one planetary gear set 310 includes a plurality of planet gears 312, the plurality of planet gears 312 are configured to engage with the sun gear 311, and the plurality of planet gears 312 are evenly distributed on a circumferential side of the one end 211 of the motor shaft 210 in a circumferential direction C of the motor shaft 210.

In this embodiment of this application, the plurality of planet gears 312 are configured to engage with the sun gear 311, and the plurality of planet gears 312 are evenly distributed on the circumferential side of the one end 211 of the motor shaft 210 in the circumferential direction C of the motor shaft 210. In this way, radial contact rigidity of the motor shaft 210 is even, and force applied to the sun gear 311 on the motor shaft 210 is even. This further helps make force applied to the bearing 5141 of the motor shaft 210 even, helps improve a bending resistance capability of the motor shaft 210, and further helps increase the critical rotation speed of the rotor 230.

The circumferential direction C of the motor shaft 210 is the same as the circumferential direction C of the powertrain 20.

In an embodiment, the plurality of planet gears 312 of the one planetary gear set 310 include four planet gears 312.

In an embodiment, as shown in FIG. 9, FIG. 16, and FIG. 17, the motor shaft 210 includes a motor shaft oil hole 215. The motor shaft oil hole 215 is configured to communicate with an internal oil channel 216 of the motor shaft 210 to receive oil. The motor shaft oil hole 215 is distributed on an outer circumferential surface of the motor shaft 210. The motor shaft oil hole 215 is exposed to the inner cavity of the reducer housing 500.

In this embodiment of this application, the motor shaft oil hole 215 is configured to communicate with the internal oil channel 216 of the motor shaft 210 to receive oil, the motor shaft oil hole 215 is distributed on the outer circumferential surface of the motor shaft 210, and the motor shaft oil hole 215 is exposed to the inner cavity of the reducer housing 500. In this way, the motor shaft oil hole 215 can spray the oil in the internal oil channel 216 of the motor shaft 210 into the inner cavity of the reducer housing 500, to lubricate the planet gear 312 of the one planetary gear set 310 and one end that is of the motor shaft 210 and that serves as the sun gear 311. This ensures normal operation of the planetary reducer 300.

In an embodiment, as shown in FIG. 9, the motor shaft oil hole 215 is located between the sun gear 311 and the bearing 5141 of the motor shaft 210 in the axial direction O of the powertrain 20. In this way, the oil sprayed from the motor shaft oil hole 215 can not only lubricate the sun gear 311 of the one planetary gear set 310, but also lubricate the bearing 5141 of the motor shaft 210. This helps improve lubrication efficiency of the powertrain 20.

In an embodiment, as shown in FIG. 4 and FIG. 12, a planetary shaft 315 of the one planetary gear set 310 includes an axial hole 3151 and a radial hole 3152. The axial hole 3151 is distributed on an axial end face of the planetary shaft 315 of the one planetary gear set 310. The radial hole 3152 is distributed on an outer circumferential surface of the planetary shaft 315 of the one planetary gear set 310. The axial hole 3151 is configured to receive the oil output from the motor shaft oil hole 215. The radial hole 3152 is configured to communicate with the axial hole 3151 to convey oil to a bearing 316 between the planetary shaft 315 and the planet gear 312 of the one planetary gear set 310 for lubrication.

In this embodiment of this application, the axial hole 3151 is distributed on the axial end face of the planetary shaft 315 of the one planetary gear set 310. In this way, it is convenient for the axial hole 3151 to receive the oil output from the motor shaft oil hole 215 and input the oil into the planetary shaft 315 of the one planetary gear set 310. The radial hole 3152 is distributed on the outer circumferential surface of the planetary shaft 315 of the one planetary gear set 310, so that it is convenient for the radial hole 3152 to convey the oil to the bearing 316 between the planetary shaft 315 and the planet gear 312 of the one planetary gear set 310 for lubrication.

In this embodiment of this application, the axial hole 3151 is configured to receive the oil output from the motor shaft oil hole 215, and the radial hole 3152 is configured to communicate with the axial hole 3151 to convey the oil to the bearing 316 between the planetary shaft 315 and the planet gear 312 of the one planetary gear set 310 for lubrication. In this way, the oil output from the motor shaft oil hole 215 can flow to the bearing 316 between the planetary shaft 315 and the planet gear 312 of the one planetary gear set 310 through the axial hole 3151 and the radial hole 3152 in sequence, and lubricate the bearing 316. This ensures normal operation of the planet gear 312 of the one planetary gear set 310.

In an embodiment, as shown in FIG. 12, an opening of the axial hole 3151 of the planetary shaft 315 of the one planetary gear set 310 faces the groove bottom 5111 of the groove 511. It is convenient for the motor shaft oil hole 215 that is located between the sun gear and the groove bottom 5111 of the groove 511 to input the oil into the axial hole 3151 of the planetary shaft 315 of the one planetary gear set 310 in the axial direction O of the powertrain 20, to lubricate the bearing 316 between the planetary shaft 315 and the planet gear 312 of the one planetary gear set 310.

In an embodiment, as shown in FIG. 4, FIG. 6, and FIG. 12, the groove 511 is further configured to accommodate the needle roller thrust bearing 630 and an oil collection baffle 640. The needle roller thrust bearing 630 is configured to rotatably connect the planet carrier 314 of the first-stage planetary gear set 310 to the first housing 510. In the axial direction O of the powertrain 20, the needle roller thrust bearing 630 is arranged between the planetary shaft 315 of the first-stage planetary gear set 310 and the groove bottom 5111 of the groove 511. The opening of the axial hole 3151 of the planetary shaft 315 of the first-stage planetary gear set 310 is exposed outside the needle roller thrust bearing 630. The needle roller thrust bearing 630 surrounds an outer circumference of the motor shaft oil hole 215, and a gap in the needle roller thrust bearing 630 is configured to convey the oil output from the motor shaft oil hole 215 to an opening of the planetary shaft 315 of the first-stage planetary gear set 310. The oil collection baffle 640 surrounds the outer circumference of the needle roller thrust bearing 630. The oil collection baffle 640 is configured to cover an outer circumferential surface of the needle roller thrust bearing 630 and the opening of the axial hole 3151 of the planetary shaft 315 of the first-stage planetary gear set 310, and is configured to communicate a gap on the outer circumferential surface of the needle roller thrust bearing 630 and the opening of the axial hole 3151 of the planetary shaft 315 of the first-stage planetary gear set 310.

In this embodiment of this application, the gap in the needle roller thrust bearing 630 is configured to convey the oil output from the motor shaft oil hole 215 to the opening of the axial hole 3151 of the planetary shaft 315 of the first-stage planetary gear set 310. In this way, the oil collection baffle 640 can guide oil thrown out from the motor shaft oil hole 215 into the opening of the axial hole 3151 of the planetary shaft 315 of the first-stage planetary gear set 310, to lubricate the planet gear 312 of the first-stage planetary gear set 310. The oil collection baffle 640 is configured to cover the outer circumferential surface of the needle roller thrust bearing 630, so that oil thrown to the needle roller thrust bearing 630 can be blocked by the oil collection baffle 640 and not directly thrown to the groove wall of the groove 511, to avoid oil leakage. In this way, the needle roller thrust bearing 630 and the first-stage planetary gear set 310 can be lubricated by the oil in a more concentrated manner. This helps ensure normal operation of the planetary coaxial reducer 300.

In an embodiment, as shown in FIG. 12, the oil collection baffle 640 is annular, and the oil collection baffle 640 includes a first opening 641 and a second opening 642. The first opening 641 is configured to communicate with the second opening 642. The first opening 641 faces the needle roller thrust bearing 630 in the radial direction R of the powertrain 20, and the first opening 641 is configured to receive, through the gap in the needle roller thrust bearing 630, the oil output from the motor shaft oil hole 215. The second opening 642 faces the axial hole 3151 of the planetary shaft 315 of the first-stage planetary gear set 310 in the axial direction O of the powertrain 20, and the second opening 642 is configured to convey oil to the axial hole 3151 of the planetary shaft 315 of the first-stage planetary gear set 310.

In this embodiment of this application, the first opening 641 faces the needle roller thrust bearing 630 in the radial direction R of the powertrain 20, and the first opening 641 is configured to receive, through the gap in the needle roller thrust bearing 630, the oil output from the motor shaft oil hole 215. In this way, the first opening 641 can receive the oil thrown from the motor shaft oil hole 215. The second opening 642 faces the axial hole 3151 of the planetary shaft 315 of the first-stage planetary gear set 310 in the axial direction O of the powertrain 20, and the second opening 642 is configured to convey oil to the axial hole 3151 of the planetary shaft 315 of the first-stage planetary gear set 310, so that oil collected at the first opening 641 of the oil collection baffle 640 can be guided into the axial hole 3151 of the planetary shaft 315 of the first-stage planetary gear set 310 from the second opening 642, to lubricate the planet gear 312 of the first-stage planetary gear set 310. This ensures normal operation of the planetary coaxial reducer 300.

In an embodiment, as shown in FIG. 4 and FIG. 13, the planetary reducer 300 further includes the another planetary gear set 320. A planetary shaft 3230 of the another planetary gear set 320 includes an axial hole 3231 and a radial hole 3232 that communicate with each other. The radial hole 3232 is configured to output oil received at the axial hole 3231 to a bearing of the planetary shaft 3230 for lubrication. The planet carrier 314 of the one planetary gear set 310 and an inner cavity wall of the reducer housing 500 are spaced each other, and a spacing between the planet carrier 314 of the one planetary gear set 310 and the inner cavity wall of the reducer housing 500 is configured to convey the oil output from the radial hole 3152 of the planet carrier 314 of the one planetary gear set 310 to the axial hole 3231 of the planetary shaft 3230 of the another planetary gear set 320. In this way, the oil flows from the one planetary gear set 310 to the another planetary gear set 320, so that the oil flows a two-stage planetary gear set for lubrication. This can reduce an oil circuit structure of the reducer housing 500 and simplifies an oil circuit design of the powertrain 20.

In an embodiment, the groove wall of the groove 511 is configured to fasten the ring gear 313 of the one planetary gear set 310. The planet carrier 314 of the one planetary gear set 310 and the groove wall of the groove 511 are spaced from each other, and a spacing between the planet carrier 314 of the one planetary gear set 310 and the groove wall of the groove 511 is configured to convey oil output from the radial hole 3152 of the planet carrier 314 of the one planetary gear set 310 to the axial hole 3231 of the planetary shaft 3230 of the another planetary gear set 310. The planet carrier 314 of the one planetary gear set 310 and the groove wall of the groove 511 are spaced from each other, so that the oil for lubricating the one planetary gear set 310 can flow from the spacing between the planet carrier 314 of the one planetary gear set 310 and the groove wall of the groove 511 to the another planetary gear set 320 for lubrication. This implements oil reuse.

In an embodiment, an inner diameter of the ring gear 322 of the another planetary gear set 320 is greater than an inner diameter of the ring gear 313 of the one planetary gear set 310, and an opening of the axial hole 3231 of the planetary shaft 3230 of the another planetary gear set 320 faces the spacing between the planet carrier 314 of the one planetary gear set 310 and the groove wall of the groove 511. When the planet carrier 314 and the planet gear 312 of the one planetary gear set 310 rotate, oil is thrown out circumferentially. The inner diameter of the ring gear 322 of the another planetary gear set 320 is greater than the inner diameter of the ring gear 313 of the one planetary gear set 310, so that the axial hole 3151 of the planetary shaft 315 of the one planetary gear set 310 is distributed on an outer circumference of the planet carrier 314 of the one planetary gear set 310, to facilitate receiving of the oil thrown out by the one planetary gear set 310.

In an embodiment, the planet carrier 314 of the one planetary gear set 310 includes an end plate 3146, and the opening of the axial hole 3231 of the planetary shaft 3230 of the another planetary gear set 320 faces a spacing between the end plate 3146 and the groove wall of the groove 511. In the radial direction R of the powertrain 20, an outer diameter of the end plate 3146 is less than a groove width of the groove 511, so that oil flowing out from the radial hole 3152 of the planetary shaft 315 of the one planetary gear set 310 can be thrown into the axial hole 3231 of the planetary shaft 3230 of the another planetary gear set 320 from the spacing between the end plate 3146 and the groove wall of the groove 511.

In an embodiment, as shown in FIG. 4 and FIG. 13, the planetary reducer 300 further includes the another planetary gear set 320. An outer circumferential surface of the one end 3142 of the planet carrier 314 of the one planetary gear set 310 is configured to be in a transmission connection to the sun gear 323 of the another planetary gear set 320. A central hole 3213 of the planet carrier 321 of the another planetary gear set 320 is configured to fasten the half shaft 50 of the wheel 40 of the electric vehicle 1, and an inner side of the other end 3143 of the planet carrier 314 of the one planetary gear set 310 is configured to accommodate the sun gear 311 of the one planetary gear set 310.

In this embodiment of this application, the planetary reducer 300 further includes the another planetary gear set 320, and the outer circumferential surface of the one end 3142 of the planet carrier 314 of the one planetary gear set 310 is configured to be in a transmission connection to the sun gear 323 of the another planetary gear set 320. In this way, power transmitted by the one planetary gear set 310 can be transmitted to the sun gear 323 of the another planetary gear set 320 through the planet carrier 314 of the one planetary gear set 310, to drive the sun gear 323 and the planet gear 324 of the another planetary gear set 320 to move. This makes the planetary reducer 300 may implement two-stage deceleration.

In this embodiment of this application, the outer circumferential surface of the one end 3142 of the planet carrier 314 of the one planetary gear set 310 is used to fasten the sun gear 323 of the second-stage planetary gear set 320, and the sun gear 311 of the motor shaft 210 is accommodated on the inner side of the other end 3143 of the planet carrier 314 of the one planetary gear set 310, so that structures of the planetary gear sets 310 and 320 in two stages can be arranged compactly in an axial direction.

In this embodiment of this application, the central hole 3213 of the planet carrier 321 of the another planetary gear set 320 is configured to fasten the half shaft 50 of the wheel 40 of the electric vehicle 1, and the half shaft 50 of the wheel 40 of the electric vehicle 1 is directly fastened to the central hole 3213 of the planet carrier 321 of the another planetary gear set 320. In this way, use of an additional spline can be reduced, and transmission between the planetary reducer 300 and the half shaft 50 of the wheel 40 of the motor vehicle is more stable. This increases the critical rotation speed of the drive motor, and helps improve overall vehicle performance.

In this embodiment of this application, the inner side of the other end 3143 of the planet carrier 314 of the one planetary gear set 310 is configured to accommodate the sun gear 311 of the one planetary gear set 310. In this way, a structure of the one planetary gear set 310 is arranged more compactly, and it is also more convenient for the sun gear 311 of the one planetary gear set 310 to transmit power to the planet gear 312 of the one planetary gear set 310 through the planet carrier 314 of the one planetary gear set 310.

In an embodiment, as shown in FIG. 4, an inner wall of the reducer housing 500 includes an annular protrusion 517. As shown in FIG. 3 and FIG. 4, the annular protrusion 517 protrudes away from the rotor 230 in the axial direction O of the powertrain 20. An inner circumferential surface of the annular protrusion 517 is configured to fasten the ring gear 313 of the one planetary gear set 310, and an outer circumferential surface of the annular protrusion 517 is configured to fasten the bearing 5151 of the planet carrier 321 of the another planetary gear set 320.

In this embodiment of this application, the inner circumferential surface of the annular protrusion 517 is configured to fasten the ring gear 313 of the one planetary gear set 310, and the outer circumferential surface of the annular protrusion 517 is configured to fasten the bearing 5151 of the planet carrier 321 of the another planetary gear set 320. In this way, the planet carrier 321 of the another planetary gear set 320 may be arranged to use axial space outside the ring gear 313 of the one planetary gear set 310, so that the one planetary gear set 310 is arranged more compactly with the another planetary gear set 320. This may reduce the axial size of the planetary reducer 300, makes a process of transmitting power from the motor shaft 210 to the half shaft 50 of the wheel 40 of the electric vehicle 1 more stable, and helps increase the critical rotation speed of the rotor 230. A smaller axial size of the planetary reducer 300 further helps shorten the axial length of the powertrain 20 and optimize a layout of the powertrain 20 in the entire vehicle.

In an embodiment, as shown in FIG. 4, the central hole 3141 at the one end 3142 of the planet carrier 314 of the one planetary gear set 310 is configured to fasten one bearing 3212 of the planet carrier 321 of the another planetary gear set 320. An end face of the one end 211 of the motor shaft 210 includes an axial through hole 211a. An opening of the axial through hole 211a faces the central hole 3141 at the one end 3142 of the planet carrier 314 of the one planetary gear set 310. The axial through hole 211a is configured to output oil in the internal oil channel 216 of the motor shaft 210 to the central hole 3141.

In this embodiment of this application, the central hole 3141 at the one end 3142 of the planet carrier 314 of the one planetary gear set 310 is configured to fasten the one bearing 3212 of the planet carrier 321 of the another planetary gear set 320, the end face of the one end 211 of the motor shaft 210 includes the axial through hole 211a, and the opening of the axial through hole 211a faces the central hole 3141 at the one end 3142 of the planet carrier 314 of the one planetary gear set 310. In this way, the oil in the internal oil channel 216 of the motor shaft 210 may be input into the central hole 3141 at the one end 3142 of the planet carrier 314 of the one planetary gear set 310 through the axial through hole 211a, to lubricate the one bearing 3212 of the planet carrier 321 of the another planetary gear set 320.

In an embodiment, the central hole 3141 at the one end 3142 of the planet carrier 314 of the one planetary gear set 310 may also be referred to as a central hole 3141 inside the fastening protrusion 3140 of the planet carrier 314 of the first-stage planetary gear set 310.

FIG. 15 is a partially enlarged view of an M3 part of the planetary reducer 300 and the motor shaft 210 in FIG. 4.

In an embodiment, as shown in FIG. 4 and FIG. 15, the planet carrier 321 of the another planetary gear set 320 includes a half shaft hole 3213 and a seal 3216. One opening 3217 of the half shaft hole 3213 extends out of the reducer housing 500 to accommodate the half shaft 50 of the wheel 40. Another opening 3218 of the half shaft hole 3213 faces the central hole 3141 at the one end 3142 of the planet carrier 314 of the one planetary gear set 310. One end 3219 of the seal 3216 is configured to seal the another opening 3218 of the half shaft hole 3213, and the other end 3220 of the seal 3216 is configured to fasten the one bearing 3212 of the planet carrier 321 of the another planetary gear set 320.

In this embodiment of this application, the one opening 3217 of the half shaft hole 3213 extends out of the reducer housing 500 to accommodate the half shaft 50 of the wheel 40, the another opening 3218 of the half shaft hole 3213 faces the central hole 3141 at the one end 3142 of the planet carrier 314 of the one planetary gear set 310, and the one end 3219 of the seal 3216 is configured to seal the another opening 3218 of the half shaft hole 3213. In this way, the one end 3219 of the seal 3216 may seal oil flowing from the internal oil channel 216 of the motor shaft 210 into the central hole 3141 at the one end 3142 of the planet carrier 314 of the one planetary gear set 310, to avoid leakage of the oil in the internal oil channel 216 of the motor shaft 210 from the half shaft hole 3213.

In this embodiment of this application, the other end 3220 of the seal 3216 is configured to fasten the one bearing 3212 of the planet carrier 321 of the another planetary gear set 320, and the one bearing 3212 of the planet carrier 321 of the another planetary gear set 320 is further fastened to the central hole 3141 at the one end 3142 of the planet carrier 314 of the one planetary gear set 310, so that the planet carrier 321 of the another planetary gear set 320 may rotate relative to the planet carrier 314 of the one planetary gear set 310. In addition, the one bearing 3212, fastened to the other end 3220 of the seal 3216, of the planet carrier 321 of the another planetary gear set 320 may receive oil from the internal oil channel 216 of the motor shaft 210 in the central hole 3141 at the one end 3142 of the planet carrier 314 of the one planetary gear set 310 for lubrication.

In an embodiment, the half shaft hole 3213 of the planet carrier 321 of the another planetary gear set 320 may also be referred to as the central hole 3213 of the planet carrier 321 of the another planetary gear set 320.

In an embodiment, as shown in FIG. 4 and FIG. 15, the seal 3216 includes a positioning groove 3221, and a groove opening of the positioning groove 3221 is away from the one planetary gear set 310 in the axial direction O of the powertrain 20. The inner diameter of the positioning groove 3221 is less than an inner diameter of the half shaft hole 3213, and the positioning groove 3221 is configured to accommodate a part of the half shaft 50 of the wheel 40 to limit movement of the half shaft 50 in the radial direction R of the powertrain 20.

In this embodiment of this application, compared with positioning the half shaft 50 with the planetary reducer 300 outside the reducer housing 500, enabling the half shaft 50 to penetrate the groove opening of the positioning groove 3221 and extend into the positioning groove 3221 of the seal 3216 may shorten an axial length between the rotor 230 of the drive motor 200 and the half shaft 50, improve power transmission stability, and help increase the critical rotation speed of the rotor 230.

In this embodiment of this application, the inner diameter of the positioning groove 3221 is less than the inner diameter of the half shaft hole 3213, and the positioning groove 3221 is configured to accommodate a part of the half shaft 50 of the wheel 40 to limit movement of the half shaft 50 in the radial direction R of the powertrain 20. This helps make transmission between the another planetary gear set 320 and the half shaft 50 of the wheel 40 more stable, and improves reliability of the powertrain 20.

In an embodiment, as shown in FIG. 4 and FIG. 15, the seal 3216 further includes a thrust bearing groove 3222. A groove opening of the thrust bearing groove 3222 faces the sun gear 323 of the another planetary gear set 320 in the axial direction O of the powertrain 20. The thrust bearing groove 3222 is configured to accommodate a needle roller thrust bearing 3223. The needle roller thrust bearing 3223 is configured to rotatably connect the sun gear 323 of the another planetary gear set 320 and the seal 3216. The thrust bearing groove 3222 surrounds an outer circumference of the positioning groove 3221, and a projection of the positioning groove 3221 and a projection of the thrust bearing groove 3222 at least partially overlap in the radial direction R of the powertrain 20.

In this embodiment of this application, the needle roller thrust bearing 3223 is configured to rotatably connect the sun gear 323 of the another planetary gear set 320 and the seal 3216. In this way, the sun gear 323 and the planet carrier 321 of the another planetary gear set 320 can rotate separately.

In this embodiment of this application, the thrust bearing groove 3222 surrounds the outer circumference of the positioning groove 3221, and the projection of the positioning groove 3221 and the projection of the thrust bearing groove 3222 at least partially overlap in the radial direction R of the powertrain 20. In this way, an axial length between the rotor 230 and the half shaft 50 can be shortened. This improves power transmission stability, and helps increase the critical rotation speed of the rotor 230.

In an embodiment, as shown in FIG. 4, one side that is of the planet carrier 321 of the another planetary gear set 320 and that is away from the motor shaft 210 further includes another thrust bearing groove 3228. The another thrust bearing groove 3228 is configured to accommodate a needle roller thrust bearing 3229. In the axial direction O of the powertrain 20, two sides of the needle roller thrust bearing 3229 are respectively in contact with a groove bottom of the second groove 522 of the second housing 520 and the planet carrier 321 of the another planetary gear set 320. In this way, the planet carrier 321 of the another planetary gear set 320 can rotate relative to the second housing 520.

In an embodiment, the needle roller thrust bearing 3223 and the needle roller thrust bearing 3229 can axially limit and fasten the planet carrier 321 of the another planetary gear set 320.

In an embodiment, the internal oil channel 216 of the motor shaft 210 may be formed by disposing an oil guide pipe 700 in a shaft cavity 213 of the motor shaft 210. As shown in FIG. 3, the oil guide pipe 700 is configured to receive oil conveyed by an internal oil channel of the housing 20a of the powertrain 20, and oil in the oil guide pipe 700 is used to cool the rotor 230 of the drive motor 200 and lubricate a gear set of the planetary reducer 300.

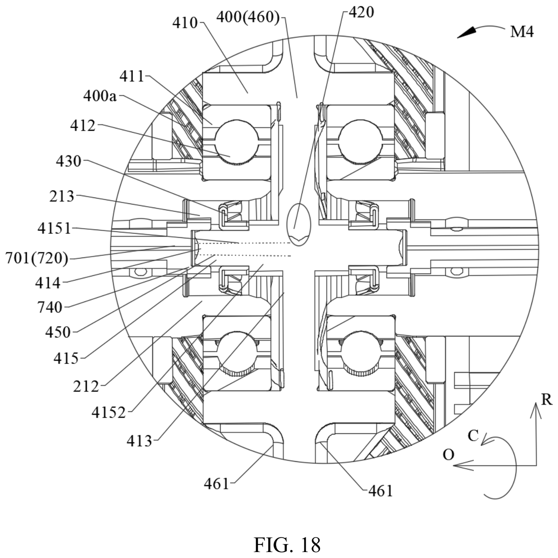

FIG. 18 is a partially enlarged view of an M4 part of the powertrain 20 in FIG. 3.

In an embodiment, as shown in FIG. 3, the motor cavity 400a and the reducer cavity 500a of the housing 20a of the powertrain 20 are arranged adjacent to each other in the axial direction O of the powertrain 20. As shown in FIG. 3, FIG. 9, FIG. 17, and FIG. 18, the housing 20a is further configured to fasten the oil guide pipe 700. The oil guide pipe 700 is configured to convey oil to at least one of the motor rotor 230 or the reducer 300. One end 720 of the oil guide pipe 700 is configured to be fastened to the housing 20a of the powertrain 20, and is configured to receive oil through an internal flow channel 420 of the motor housing 400. The other end 730 of the oil guide pipe 700 extends into the reducer cavity 500a in the axial direction O of the drive motor 200 through the shaft cavity 213 of the motor shaft 210.

In this embodiment of this application, the housing 20a is further configured to fasten the oil guide pipe 700. The oil guide pipe 700 is fastened by using the housing 20a of the powertrain 20, so that the oil guide pipe 700 can be in a stationary state relative to the motor shaft 210. Compared with the oil guide pipe 700 that rotates with the motor shaft 210 to result in decrease of an amount of oil input to the reducer 300, the stationary oil guide pipe 700 can increase a flow rate of oil conveyed to the reducer cavity 500a. In this way, it is ensured that even when the motor shaft 210 rotates at a high speed, the oil in the oil guide pipe 700 is not thrown out of the oil guide pipe 700 with rotation of the motor shaft 210, so that more oil in the oil guide pipe 700 can flow into the reducer cavity 500a to lubricate the reducer 300. This helps ensure normal operation of the reducer 300.

In this embodiment of this application, the oil guide pipe 700 is fastened to the housing 20a to keep the oil guide pipe 700 stationary, so that no motion gap needs to be reserved between the oil guide pipe 700 and the shaft cavity 213 of the motor shaft 210. In this way, only a very small amount of oil leaks between the shaft cavity 213 of the motor shaft 210 and an outer wall of the oil guide pipe 700. The stationary oil guide pipe 700 can also reduce wear and risk of disengagement caused by rotation of the oil guide pipe 700 with the motor shaft 210, thereby improving reliability of the powertrain 20.

In this embodiment of this application, the oil guide pipe 700 is configured to convey oil to at least one of the motor rotor 230 or the reducer 300, so that the motor rotor 230 can be cooled, and the drive motor 200 does not fail due to overheating. A gear set of the reducer 300 can also be lubricated, so that the reducer 300 can operate normally.

In this embodiment of this application, the one end 720 of the oil guide pipe 700 is configured to be fastened to the housing 20a of the powertrain 20 and is configured to receive oil through the internal flow channel 420 of the motor housing 400, and the other end 730 of the oil guide pipe 700 extends into the reducer cavity 500a in the axial direction O of the drive motor 200 through the shaft cavity 213 of the motor shaft 210, so that the one end 720 of the oil guide pipe 700 can receive oil from the internal flow channel 420 of the motor housing 400, and the oil flows in the oil guide pipe 700 and is output to the reducer cavity 500a through the other end 730 of the oil guide pipe 700. In this way, the oil in the oil guide pipe 700 can lubricate the gear set of the reducer 300 in the reducer cavity 500a. In addition, the oil guide pipe 700 is arranged in the shaft cavity 213 of the motor shaft 210, so that space in the shaft cavity 213 of the motor shaft 210 can be fully used, and it is more convenient for the oil guide pipe 700 to convey oil to the motor rotor 230 that is fastened to the motor shaft 210 for cooling.

In this embodiment of this application, the one end 720 of the oil guide pipe 700 is fastened to the housing 20a of the powertrain 20, and is configured to receive the oil through the internal flow channel 420 of the motor housing 400, so that the oil guide pipe 700 is fastened to the housing 20a instead of being directly fastened to the motor shaft 210. In this way, the oil guide pipe 700 can remain stationary when the motor shaft 210 rotates, so that the oil in the oil guide pipe 700 is not completely thrown out due to high-speed rotation of the motor shaft 210, and the oil can flow to the other end 730 of the oil guide pipe 700. The other end 730 of the oil guide pipe 700 extends into the reducer cavity 500a in the axial direction O of the drive motor 200 through the shaft cavity 213 of the motor shaft 210, so that oil flowing into the oil guide pipe 700 from the one end 720 of the oil guide pipe 700 can flow into the reducer cavity 500a from the other end 730 of the oil guide pipe 700 to lubricate the gear set of the reducer 300. In this way, the oil in the oil guide pipe 700 can not only cool the motor rotor 230, but also lubricate the reducer 300.

In an embodiment, as shown in FIG. 3 and FIG. 18, a cavity wall of the motor cavity 400a includes a motor shaft bearing groove 410. A groove opening 411 of the motor shaft bearing groove 410 faces the motor rotor 230 in the axial direction O of the drive motor 200. The motor shaft bearing groove 410 is configured to fasten an outer ring of a motor bearing 412. An inner ring of the motor bearing 412 is configured to fasten the motor shaft 210. A groove bottom 413 of the motor shaft bearing groove 410 is configured to fasten the one end 720 of the oil guide pipe 700.

In this embodiment of this application, the groove opening 411 of the motor shaft bearing groove 410 faces the motor rotor 230 in the axial direction O of the drive motor 200, so that the motor bearing 412 in the motor shaft bearing groove 410 is fastened to the motor shaft 210 to which the motor rotor 230 is fastened.

In this embodiment of this application, the motor shaft bearing groove 410 is configured to fasten the outer ring of the motor bearing 412, the inner ring of the motor bearing 412 is fastened to the motor shaft 210, and the one end 720 of the oil guide pipe 700 is fastened to the groove bottom 413 of the motor shaft bearing groove 410, so that the oil guide pipe 700 is arranged by passing through the shaft cavity 213 of the motor shaft 210. The groove bottom 413 of the motor shaft bearing groove 410 is configured to fasten the one end 720 of the oil guide pipe 700, so that the oil guide pipe 700 may be in a stationary state relative to the shaft cavity 213 of the motor shaft 210. This helps convey more oil in the oil guide pipe 700 to the reducer cavity 500a to lubricate the gear set of the reducer 300. The groove bottom 413 of the motor shaft bearing groove 410 is configured to fasten one end 720 of the oil guide pipe 700, so that the oil guide pipe 700 may be arranged to use axial space of the motor shaft bearing groove 410. This helps reduce the axial length of the powertrain 20.

In an embodiment, as shown in FIG. 3 and FIG. 18, the groove bottom 413 of the motor shaft bearing groove 410 includes an oil outlet 414. The oil outlet 414 is configured to output the oil in the internal flow channel 420 of the motor housing 400. An opening of the oil outlet 414 faces the motor rotor 230 in the axial direction O of the powertrain 20. The oil outlet 414 is configured to accommodate embedding of the one end 720 of the oil guide pipe 700.

In this embodiment of this application, the groove bottom 413 of the motor shaft bearing groove 410 includes the oil outlet 414, and the groove bottom 413 of the motor shaft bearing groove 410 is configured to fasten the one end 720 of the oil guide pipe 700. In this way, the oil that is in the internal flow channel 420 of the motor housing 400 and that is output from the oil outlet 414 is quickly conveyed to the one end 720 of the oil guide pipe 700.

In this embodiment of this application, the opening of the oil outlet 414 faces the motor rotor 230 in the axial direction O of the powertrain 20. In this way, the oil that is in the internal flow channel 420 of the motor housing 400 and that is output from the oil outlet 414 may be conveyed to the motor rotor 230 more quickly for cooling the motor rotor 230.

In this embodiment of this application, the oil outlet 414 is configured to accommodate the embedding of the one end 720 of the oil guide pipe 700, so that the oil output from the oil outlet 414 can be input into the one end 720 of the oil guide pipe 700. An embedding connection manner may make a gap between the oil outlet 414 and the one end 720 of the oil guide pipe 700 small, thereby reducing oil leakage in a process of outputting oil from the oil outlet 414 to the one end 720 of the oil guide pipe 700. This ensures that the one end 720 of the oil guide pipe 700 can convey sufficient oil to the other end 730 of the oil guide pipe 700, thereby ensuring that the motor rotor 230 has sufficient oil for cooling, and ensuring that the gear set of the reducer 300 has sufficient oil for lubrication.

In an embodiment, the oil outlet 414 is in interference fit with the one end 720 of the oil guide pipe 700, so that there is no gap between the oil outlet 414 and the one end 720 of the oil guide pipe 700.

In an embodiment, as shown in FIG. 3 and FIG. 18, the motor housing 400 includes another motor shaft bearing groove 410. A groove opening 411 of the another motor shaft bearing groove 410 faces the opening 401 of the motor housing 400 in the axial direction O of the powertrain 20. The another motor shaft bearing groove 410 is configured to fasten an outer ring of the another motor bearing 412. An inner ring of the another motor bearing 412 is configured to fasten the other end 212 of the motor shaft 210. The groove bottom 413 of the another motor shaft bearing groove 410 includes an oil outlet 414. An opening of the oil outlet 414 faces the other end 212 of the motor shaft 210 in the axial direction O of the powertrain 20. The oil outlet 414 is configured to output the oil conveyed in the internal flow channel 420 of the motor housing 400. The motor shaft 210 includes a shaft hole 213. The shaft hole 213 penetrates the motor shaft 210 in the axial direction O of the powertrain 20. The shaft hole 213 is configured to convey the oil output from the oil outlet 414 to the groove 511 to lubricate the planetary gear set 310 of the planetary reducer 300.

In this embodiment of this application, the groove opening 411 of the another motor shaft bearing groove 410 faces the opening 401 of the motor housing 400 in the axial direction O of the powertrain 20. In this way, the another motor bearing 412 can be arranged facing the motor rotor 230, and it is more convenient to fasten and accommodate the another motor bearing 412 to the other end 212 that is of the motor shaft 210 and that is accommodated in the motor housing 400.

In this embodiment of this application, the groove bottom 413 of the another motor shaft bearing groove 410 includes the oil outlet 414, and the opening of the oil outlet 414 faces the other end 212 of the motor shaft 210 in the axial direction O of the powertrain 20. In this way, it is convenient to convey the oil conveyed in the internal flow channel 420 of the motor housing 400 to the other end 212 of the motor shaft 210 through the oil outlet 414.

In this embodiment of this application, the motor shaft 210 includes the shaft hole 213, and the shaft hole 213 penetrates the motor shaft 210 in the axial direction O of the powertrain 20, so that the oil can flow in the motor shaft 210. The shaft hole 213 is configured to convey the oil output from the oil outlet 414 to the groove 511 to lubricate the planetary gear set 310 of the planetary reducer 300, so that the oil conveyed through the internal flow channel 420 of the motor housing 400 can be transmitted to the one end 211 of the motor shaft 210 through the other end 212 of the motor shaft 210, and then flows into the groove 511 of the first housing 510 to lubricate the planetary gear set 310 of the planetary reducer 300. In addition, as the one end 211 of the motor shaft 210 serves as the sun gear 311 to engage with the planet gear 312 of the planetary reducer 300, oil is conveyed from the other end 212 of the motor shaft 210 to the planetary gear set 310 at the one end 211 of the motor shaft 210 through the oil outlet 414 of the motor housing 400, and no additional oil pipeline needs to be disposed, so that an oil path structure is compact.

In an embodiment, the shaft hole 213 of the motor shaft 210 penetrates the motor shaft 210 in the axial direction O of the powertrain 20, and the shaft hole 213 of the motor shaft 210 may also be referred to as the shaft cavity 213 of the motor shaft 210.

In an embodiment, as shown in FIG. 3 and FIG. 18, the groove bottom 413 of the motor shaft bearing groove 410 includes a protrusion 415. The protrusion 415 protrudes toward the opening 401 of the motor housing 400 in the axial direction O of the powertrain 20. The oil outlet 414 is distributed on an end face of the protrusion 415. The oil outlet 414 is connected to the internal flow channel 420 of the motor housing 400 through an internal flow channel of the protrusion 415 to receive oil. An outer circumferential surface of the protrusion 415 and an inner wall of the shaft hole 213 are configured to fasten a conductive member 430. The conductive member 430 is located between the outer circumferential surface of the protrusion 415 and the inner wall of the shaft hole 213.

In this embodiment of this application, the groove bottom 413 of the another motor shaft bearing groove 410 includes the protrusion 415, the protrusion 415 protrudes toward the opening 401 of the motor housing 400 in the axial direction O of the powertrain 20, the oil outlet 414 is distributed on the end face of the protrusion 415, the oil outlet 414 is connected to the internal flow channel 420 of the motor housing 400 through the internal flow channel of the protrusion 415 to receive the oil, and the protrusion 415 protrudes toward the opening 401 of the motor housing 400, in other words, the protrusion 415 protrudes toward the motor shaft 210. This further helps correspondingly conveying the oil in the internal flow channel 420 of the motor housing 400 to the shaft hole 213 of the motor shaft 210 through the internal flow channel of the protrusion 415.

In this embodiment of this application, the outer circumferential surface of the protrusion 415 and the inner wall of the shaft hole 213 are configured to fasten the inner ring of the conductive member 430, the conductive member 430 is located between the outer circumferential surface of the protrusion 415 and the inner wall of the shaft hole 213, and the protrusion 415 on which the oil outlet 414 is located and the inner wall of the shaft hole 213 of the motor shaft 210 are reused to fasten the conductive member 430. In this way, the protrusion 415 can not only convey the oil, but also be in contact with the conductive member 430 to implement grounding of the conductive member 430 and the motor shaft 210. In addition, the conductive member 430 is arranged to use space, in the radial direction R of the powertrain 20, of the shaft hole 213 of the motor shaft 210, so that the conductive member 430 is arranged without additionally occupying space, in a direction other than the axial direction O of the powertrain 20, of the motor shaft 210. In other words, grounding can be implemented without additionally occupying an axial size of the powertrain 20.

If the conductive member 430 is to be arranged on an outer circumference of the other end 212 of the motor shaft 210, in one aspect, axial space in which the another motor bearing 412 is arranged can be compressed without changing a length of the motor shaft 210. However, as a gap between the another motor shaft bearing groove 410 and the rotor 230 is small, it is difficult to implement. In another aspect, a length of the motor shaft 210 may be extended, so that the outer circumference of the other end 212 of the motor shaft 210 has sufficient space to arrange the conductive member 430 and the another motor bearing 412. However, this increases an axial size of the powertrain 20, and is not conducive to a layout of the powertrain 20 in the entire vehicle.

In an embodiment, as shown in FIG. 18, in the radial direction R of the powertrain 20, an outer diameter of a part that is of the protrusion 415 and that is configured to fasten the conductive member 430 is less than an inner diameter of a part that is of the shaft hole 213 and that is configured to fasten the conductive member 430. In this way, the conductive member 430 can be arranged between the outer circumferential surface of the protrusion 415 and the inner wall of the shaft hole 213 of the motor shaft 210, so that the conductive member 430 is arranged without additionally occupying space, in the direction other than the axial direction O of the powertrain 20, of the motor shaft 210. This may reduce the axial size of the motor shaft 210, and helps shortens the axial size of the powertrain 20.

In an implementation, as shown in FIG. 18, the protrusion 415 includes a fastening section 4151 and a connection section 4152. The connection section 4152 is connected between the fastening section 4151 and the groove bottom 413 of the another motor shaft bearing groove 410. An outer diameter of the fastening section 4151 is less than an outer diameter of the connection section 4152. The fastening section 4151 is configured to fasten the conductive member 430. A projection of the fastening section 4151 and a projection of a groove peripheral wall of the another motor shaft bearing groove 410 at least partially overlap in the radial direction R of the powertrain 20, so that the conductive member 430 and the another motor bearing 412 overlap in the radial direction R of the powertrain 20. In this way, axial space of the another motor bearing 412 is reused to arrange the conductive member 430. This helps shorten the axial size of the powertrain 20.

In an embodiment, the conductive member 439 is a conductive bearing.

In an embodiment, as shown in FIG. 18, the groove bottom 413 of the motor shaft bearing groove 410 includes a nozzle 450. The nozzle 450 faces the motor rotor 230 in the axial direction O of the powertrain 20, and one end 720 of the oil guide pipe 700 is configured to accommodate embedding of the nozzle 450.

In this embodiment of this application, as shown in FIG. 3 and FIG. 18, the nozzle 450 faces the motor rotor 230 in the axial direction O of the powertrain 20, so that the one end 720 of the oil guide pipe 700 receives oil sprayed by the nozzle 450, and it is also more convenient to convey the oil to the motor rotor 230 for cooling the motor rotor 230.

In this embodiment of this application, the one end 720 of the oil guide pipe 700 is configured to accommodate the embedding of the nozzle 450, so that a connection gap between the one end 720 of the oil guide pipe 700 and the nozzle 450 is small. In this way, a leakage amount of oil in the internal flow channel 420 of the motor housing 400 in a process of conveying the oil to the one end 720 of the oil guide pipe 700 through the nozzle 450 is reduced, so that almost all the oil conveyed by the nozzle 450 can be received by the one end 720 of the oil guide pipe 700. This ensures that the one end 720 of the oil guide pipe 700 can convey sufficient oil to the other end 730 of the oil guide pipe 700, thereby ensuring that the motor rotor 230 has sufficient oil for cooling, and ensuring that the gear set of the reducer 300 has sufficient oil for lubrication.

In an embodiment, the one end 720 of the oil guide pipe 700 is in interference fit with the nozzle 450, so that there is no gap between the nozzle 450 and the one end 720 of the oil guide pipe 700.

In an embodiment, a structure of the nozzle 450 in FIG. 18 is the same as a structure of the protrusion 415. In an embodiment, the nozzle 450 and the protrusion 415 are of a same structure. In an embodiment, the nozzle 450 and the protrusion 415 are two adjacent structural components.

In an embodiment, as shown in FIG. 18, the one end 720 of the oil guide pipe 700 includes a base 740, and the base 740 is configured to surround the nozzle 450 fastened to the groove bottom 413 of the motor shaft bearing groove 410. The base 740 and an outer circumference of the nozzle 450 are in small-gap or small-transition fit, so that a leakage amount of oil that is from the internal flow channel 420 of the motor housing 400 and that is received at the one end 720 of the oil guide pipe 700 can be minimized, to implement "zero leakage".

In an embodiment, the base 740 includes an anti-rotation boss. The anti-rotation boss can prevent the oil guide pipe 700 from rotating with the motor shaft 210, to ensure that the oil guide pipe 700 is in a stationary state.

In an embodiment, as shown in FIG. 17, an inner diameter of the one end 720 of the oil guide pipe 700 is greater than an inner diameter of the other end 730 of the oil guide pipe 700.

In this embodiment of this application, as shown in FIG. 3, FIG. 9, and FIG. 18, the inner diameter of the one end 720 of the oil guide pipe 700 is greater, so that it is convenient for the one end 720 of the oil guide pipe 700 to receive the oil output from the internal flow channel 420 of the motor housing 400. The inner diameter of the other end 730 of the oil guide pipe 700 is smaller, so that the other end 730 of the oil guide pipe 700 can penetrate the shaft cavity 213 of the motor shaft 210 and extend into the reducer cavity 500a in the axial direction O of the drive motor 200. The inner diameter of the one end 720 of the oil guide pipe 700 is greater than the inner diameter of the other end 730 of the oil guide pipe 700, so that a flow rate of oil flowing from the one end 720 of the oil guide pipe 700 to the other end 730 of the oil guide pipe 700 can be increased. This further helps the other end 730 of the oil guide pipe 700 spray oil into the reducer cavity 500a to lubricate the gear set of the reducer 300.

In an embodiment, as shown in FIG. 17, an inner wall of the shaft cavity 213 of the motor shaft 210 is configured to fasten an outer ring of an oil guide pipe bearing 710, and an inner ring of the oil guide pipe bearing 710 is configured to fasten the oil guide pipe 700. The oil guide pipe 700 passes through the inner ring of the oil guide pipe bearing 710.

In this embodiment of this application, as shown in FIG. 3, FIG. 9, and FIG. 17, the inner wall of the shaft cavity 213 of the motor shaft 210 is configured to fasten the outer ring of the oil guide pipe bearing 710, and the inner ring of the oil guide pipe bearing 710 is configured to fasten the oil guide pipe 700. The oil guide pipe 700 passes through the inner ring of the oil guide pipe bearing 710, so that the oil guide pipe 700 remains stationary in the shaft cavity 213 of the motor shaft 210 through the oil guide pipe bearing 710 when the motor shaft 210 rotates. In this way, more oil in the oil guide pipe 700 can be conveyed from the one end 720 of the oil guide pipe 700 to the other end 730 of the oil guide pipe 700 more smoothly, to lubricate the gear set of the reducer 300 in the reducer cavity 500a.

In an embodiment, as shown in FIG. 9 and FIG. 18, the shaft hole 213 is configured to accommodate the oil guide pipe 700 and the oil guide pipe bearing 710. An outer circumferential surface of the oil guide pipe 700 is configured to fasten the inner ring of the oil guide pipe bearing 710. The inner wall of the shaft hole 213 is configured to fasten the outer ring of the oil guide pipe bearing 710. An inlet 701 of the oil guide pipe 700 is configured to receive oil output from an oil outlet 414. The inlet 701 of the oil guide pipe 700 is fastened to the groove bottom 413 of the another motor shaft bearing groove 410. The outlet 702 of the oil guide pipe 700 is configured to output oil to the groove 511 to lubricate the plurality of planet gears 312. The outlet 702 of the oil guide pipe 700 is exposed at the one end 211 of the motor shaft 210.

In this embodiment of this application, the shaft hole 213 is configured to accommodate the oil guide pipe 700 and the oil guide pipe bearing 710, the outer circumferential surface of the oil guide pipe 700 is configured to fasten the inner ring of the oil guide pipe bearing 710, and the inner wall of the shaft hole 213 is configured to fasten the outer ring of the oil guide pipe bearing 710, so that the oil guide pipe 700 in the shaft hole 213 does not rotate with the motor shaft 210, and the oil guide pipe 700 may remain stationary. In this way, when the motor shaft 210 rotates at a high speed, oil conveyed into the oil guide pipe 700 from the inlet 701 of the oil guide pipe 700 located at the other end 212 of the motor shaft 210 is thrown out by the motor shaft 210, and cannot be conveyed to the planetary reducer 300 located at the one end 211 of the motor shaft 210 through the outlet 702 of the oil guide pipe 700, so that the oil conveyed from the inlet 701 of the oil guide pipe 700 can be conveyed from the outlet 702 of the oil guide pipe 700 to the plurality of planet gears 312 in the groove 511, to lubricate the planetary gear set 310 of the planetary reducer 300. This ensures normal operation of the planetary reducer 300.

In this embodiment of this application, the outlet 702 of the oil guide pipe 700 is exposed at the one end 211 of the motor shaft 210, so that the oil in the oil guide pipe 700 is not blocked by the inner wall of the shaft hole 213 and can be directly sprayed from the outlet 702 of the oil guide pipe 700 to the plurality of planet gears 312 of the planetary reducer 300. This helps lubricate the plurality of planet gears 312 of the planetary reducer 300.

In an embodiment, as shown in FIG. 17, the other end 730 of the oil guide pipe 700 further includes another nozzle 731. The inner ring of the oil guide pipe bearing 710 is configured to be fastened to the another nozzle 731 of the oil guide pipe 700, and an outlet of the another nozzle 731 is the outlet 702 of the oil guide pipe 700.

In an embodiment, as shown in FIG. 17, the outer circumferential surface of the oil guide pipe 700 includes an annular protrusion 750. An outer diameter of the annular protrusion 750 is less than an inner diameter of the shaft cavity 213 of the motor shaft 210 and is greater than an inner diameter of the inner ring of the oil guide pipe bearing 710.

In this embodiment of this application, the outer diameter of the annular protrusion 750 is less than the inner diameter of the shaft cavity 213 of the motor shaft 210, so that the annular protrusion 750 may be arranged in the shaft cavity 213 of the motor shaft 210. The outer diameter of the annular protrusion 750 is greater than the inner diameter of the inner ring of the oil guide pipe bearing 710, so that the oil guide pipe bearing 710 can axially limit the annular protrusion 750 in the axial direction O of the drive motor 200. In this way, the oil guide pipe bearing 710 may axially limit the oil guide pipe 700, to reduce an axial fluttering amount of the oil guide pipe 700. This helps improve fastening stability of the oil guide pipe 700, and further improves stability and reliability of the powertrain 20.

In an embodiment, as shown in FIG. 17 and FIG. 18, the oil guide pipe bearing 710 is further configured to electrically connect the motor shaft 210 and the oil guide pipe 700. The oil guide pipe 700 is further configured to electrically connect the motor housing 400.

In this embodiment of this application, the oil guide pipe bearing 710 is further configured to electrically connect the motor shaft 210 and the oil guide pipe 700, so that an axial voltage on the motor shaft 210 may be conducted to the oil guide pipe 700 through the oil guide pipe bearing 710. The oil guide pipe 700 is further configured to electrically connect the motor housing 400, so that a current that is on the motor shaft 210 and that is received by the oil guide pipe 700 may be conducted to the motor housing 400, to ground the motor shaft 210. This can prevent the motor bearing 412 fastened to the motor shaft 210 from being electrically corroded, thereby improving reliability of the powertrain 20.

In this embodiment of this application, reusing the oil guide pipe bearing 710 as a conductive bearing not only reduces use of components, but also reduces axial space of the motor shaft 210 occupied by arranging the conductive bearing on the outer circumferential surface of the motor shaft 210. In this way, other components fastened to the motor shaft 210 are arranged more compactly, so that an arrangement requirement can be met by using a shorter motor shaft 210. This shortens the axial size of the powertrain 20, and helps miniaturize of the powertrain 20.

In an embodiment, the oil guide pipe 700 is a metal pipe body, so that the oil guide pipe 700 can conduct a current from the motor shaft 210.

In an embodiment, as shown in FIG. 3 and FIG. 17, the outer circumferential surface of the oil guide pipe 700 includes a plurality of first through holes 760. Each first through hole 760 penetrates a pipe wall of the oil guide pipe 700. The plurality of first through holes 760 are distributed on a part that is of the oil guide pipe 700 and that is located in the motor cavity 400a. A diameter of each first through hole 760 is less than an inner diameter of the other end 730 of the oil guide pipe 700.

In this embodiment of this application, each first through hole 760 penetrates the pipe wall of the oil guide pipe 700, so that the oil in the oil guide pipe 700 can flow out of the oil guide pipe 700 through the first through hole 760. The plurality of first through holes 760 are distributed on the part that is of the oil guide pipe 700 and that is located in the motor cavity 400a, so that oil output from the first through hole 760 can be conveyed into the motor cavity 400a more quickly through a shorter path to cool the motor rotor 230. This improves cooling efficiency of the powertrain 20.

In this embodiment of this application, the diameter of each first through hole 760 is less than the inner diameter of the other end 730 of the oil guide pipe 700. The diameter of the first through hole 760 is smaller, so that a smaller amount of the oil in the oil guide pipe 700 is output through the first through hole 760, and a greater amount of oil flows to the other end 730 of the oil guide pipe 700. In this way, more oil enters the reducer cavity 500a, so that a lubrication requirement of the reducer 300 is met. This helps ensure normal operation of the reducer 300. If the diameter of the first through hole 760 is greater than the diameter of the other end 730 of the oil guide pipe 700, flow resistance of oil flowing through the first through hole 760 is smaller, so that more oil in the oil guide pipe 700 flows out of the first through hole 760 to reach the motor rotor 230, and a smaller amount of oil flows to the other end 730 of the oil guide pipe 700. In this case, the gear set of the reducer 300 cannot be fully lubricated, and operating efficiency of the reducer 300 is reduced.

In an embodiment, as shown in FIG. 3 and FIG. 17, the outer circumferential surface of the oil guide pipe 700 includes a plurality of second through holes 770. Each second through hole 770 penetrates the pipe wall of the oil guide pipe 700. The plurality of second through holes 770 are distributed on a part that is of the oil guide pipe 700 and that is located in the reducer cavity 500a. A quantity of first through holes 760 is less than a quantity of second through holes 770.

In this embodiment of this application, each second through hole 770 penetrates the pipe wall of the oil guide pipe 700, so that the oil in the oil guide pipe 700 can flow out of the oil guide pipe 700 through the second through hole 770. The plurality of second through holes 770 are distributed on the part that is of the oil guide pipe 700 and that is located in the reducer cavity 500a, so that oil output from the second through hole 770 can be conveyed to the reducer cavity 500a more quickly through a shorter path, to lubricate the gear set of the reducer 300. This improves lubrication efficiency of the powertrain 20.

In this embodiment of this application, the quantity of first through holes 760 is less than the quantity of second through holes 770, so that an amount of oil flowing out from the first through holes 760 to the motor rotor 230 is less than an amount of oil flowing out from the second through holes 770 to the gear set of the reducer 300. This ensures that the gear set of the reducer 300 can receive more oil and be fully lubricated, and further facilitates normal operation of the reducer 300.

In an embodiment, as shown in FIG. 17, a diameter of each first through hole 760 is less than a diameter of each second through hole 770.

In this embodiment of this application, as shown in FIG. 3 and FIG. 17, the diameter of the first through hole 760 is smaller, so that flow resistance of oil flowing through the first through hole 760 is greater. The diameter of the second through hole 770 is greater, so that flow resistance of oil flowing through the second through hole 770 is smaller. The diameter of each first through hole 760 is less than the diameter of each second through hole 770, so that more oil in the oil guide pipe 700 flows out of the second through hole 770 with smaller flow resistance to the reducer cavity 500a. This ensures that the reducer 300 in the reducer cavity 500a can be lubricated by more oil, and further facilitates normal operation of the reducer 300.

In an embodiment, as shown in FIG. 3 and FIG. 17, at a lower temperature, the oil in the oil guide pipe 700 has higher viscosity and a thicker boundary layer, and the diameter of the first through hole 760 is smaller, so that the oil is unlikely to flow out to the motor rotor 230 through the first through hole 760, and more oil is conveyed to the reducer cavity 500a through the other end 730 of the oil guide pipe 700 to lubricate the gear set of the reducer 300. At a higher temperature, the oil in the oil guide pipe 700 has lower viscosity. Even if the diameter of the first through hole 760 is smaller, the oil can flow out of the first through hole 760 to cool the motor rotor 230. In this way, the oil guide pipe 700 in the powertrain 20 can implement different flow distribution in high-temperature and low-temperature scenarios, so that a cooling and lubrication effect of the powertrain 20 is optimal.

In an embodiment, as shown in FIG. 4, FIG. 16, and FIG. 17, the outer circumferential surface of the motor shaft 210 includes a plurality of third through holes 780. Each third through hole 780 is connected to the shaft cavity 213 of the motor shaft 210. A diameter of each third through hole 780 is greater than or equal to the diameter of each first through hole 760.

In this embodiment of this application, the outer circumferential surface of the motor shaft 210 includes the plurality of third through holes 780, and each third through hole 780 is connected to the shaft cavity 213 of the motor shaft 210, so that oil in the shaft cavity 213 of the motor shaft 210 can be output through the third through hole 780, to cool the motor rotor 230 of the drive motor 200.

In this embodiment of this application, the diameter of each third through hole 780 is greater than or equal to the diameter of each first through hole 760. The diameter of the first through hole 760 is smaller, so that an amount of oil output from the first through hole 760 is smaller, and an amount of oil conveyed by the oil guide pipe 700 to the reducer 300 is greater. This ensures that the gear set of the reducer 300 can be fully lubricated. The diameter of the third through hole 780 is greater, so that oil output from the first through hole 760 of the oil guide pipe 700 can be conveyed to the motor rotor 230 through the third through hole 780 completely or to a maximum extent. This ensures a better cooling effect of the oil on the motor rotor 230 without affecting an amount of lubricating oil of the reducer 300.

In an embodiment, as shown in FIG. 4, FIG. 16, and FIG. 17, in the axial direction O of the powertrain 20, the motor shaft oil hole 215 and the plurality of third through holes 780 are arranged on two sides of the first housing 510.

In an embodiment, as shown in FIG. 4 and FIG. 17, the reducer 300 includes the first-stage planetary gear set 310 and the second-stage planetary gear set 320. The motor shaft 210 is configured to fasten the sun gear 311 of the first-stage planetary gear set 310. The planet carrier 314 of the first-stage planetary gear set 310 is configured to fasten the sun gear 323 of the second-stage planetary gear set 320. The central hole 3213 of the planet carrier 321 of the second-stage planetary gear set 320 is configured to couple to the half shaft 50 of the wheel 40 of the electric vehicle 1. The other end 730 of the oil guide pipe 700 extends into the central hole 3141 of the planet carrier 314 of the first-stage planetary gear set 310.

In this embodiment of this application, the motor shaft 210 is configured to fasten the sun gear 311 of the first-stage planetary gear set 310, so that kinetic energy of the motor rotor 230 can be transmitted to the sun gear 311 of the first-stage planetary gear set 310, and the planet gear 312 of the first-stage planetary gear set 310 rotates. The planet carrier 314 of the first-stage planetary gear set 310 is configured to fasten the sun gear 323 of the second-stage planetary gear set 320, so that the first-stage planetary gear set 310 can transmit power from the motor shaft 210 to the second-stage planetary gear set 320, and the planet gear 324 of the second-stage planetary gear set 320 rotates. The central hole 3213 of the planet carrier 321 of the second-stage planetary gear set 320 is configured to couple to the half shaft 50 of the wheel 40 of the electric vehicle 1, so that the planet carrier 321 of the second-stage planetary gear set 320 can transmit power to the half shaft 50 of the wheel 40 of the electric vehicle 1. In this way, the wheel 40 can be driven by using power obtained after the reducer 300 decelerates.

In this embodiment of this application, the other end 730 of the oil guide pipe 700 extends into the central hole 3141 of the planet carrier 314 of the first-stage planetary gear set 310, so that the other end 730 of the oil guide pipe 700 can be exposed to the sun gear 311 of the first-stage planetary gear set 310. In this way, when the motor shaft 210 rotates at a high speed, oil flowing out from the other end 730 of the oil guide pipe 700 does not hit and stray in the shaft cavity 213 of the motor shaft 210, and can be directly sprayed outside the motor shaft 210. This makes it more convenient for the oil in the oil guide pipe 700 to lubricate the sun gear 311 of the first-stage planetary gear set 310 and the plurality of planet gears 312 distributed in a circumferential direction of the sun gear 311, thereby improving lubrication efficiency of the reducer 300.

In an embodiment, as shown in FIG. 3 and FIG. 18, the housing 20a of the powertrain 20 includes the motor housing 400 and two reducer housings 500. The motor housing 400 includes a partition plate 460 and two openings 401. The partition plate 460 is configured to divide the motor housing 400 into two motor cavities 400a. The two openings 401 are distributed on two sides of the partition plate 460 in the axial direction O of the powertrain 20. Each reducer housing 500 is configured to: enclose an opening 401 of one motor cavity 400a and form one reducer cavity 500a. The partition plate 460 includes two side surfaces 461, and the two side surfaces 461 are distributed opposite to each other in the axial direction O of the powertrain 20. The two side surfaces 461 are respectively configured to fasten two oil guide pipes 700. The two oil guide pipes 700 are configured to receive oil conveyed by a same internal flow channel 420 in the partition plate 460. The two oil guide pipes 700 respectively convey oil to the two reducer cavities 500a through motor shafts 210 of two drive motors 200 in opposite directions.

In this embodiment of this application, the partition plate 460 is configured to divide the motor housing 400 into two motor cavities 400a. The two openings 401 are distributed on the two sides of the partition plate 460 in the axial direction O of the powertrain 20, so that the motor stator 220 and the motor rotor 230 of the drive motor 200 are mounted into the motor housing 400 in a direction of each opening 401. Each reducer housing 500 is configured to: enclose the opening 401 of one motor cavity 400a and form one reducer cavity 500a, so that the two reducers 300 and the two drive motors 200 are arranged in the axial direction O of the powertrain 20.

In this embodiment of this application, the partition plate 460 includes the two side surfaces 461, and the two side surfaces 461 are distributed opposite to each other in the axial direction O of the powertrain 20. The two side surfaces 461 are respectively configured to fasten the two oil guide pipes 700, the two oil guide pipes 700 are configured to receive oil conveyed by the same internal flow channel 420 in the partition plate 460, so that the two oil guide pipes 700 can receive oil in the same internal flow channel 420 of the partition plate 460. This can simplify arrangement of oil guide pipes in the partition plate 460. The two oil guide pipes 700 respectively penetrate the motor shafts 210 of the two drive motors 200 in the opposite directions, to convey oil to the two reducer cavities 500a, so that the oil conveyed from the same internal flow channel 420 in the partition plate 460 can be distributed through the two oil guide pipes 700, and enters the two motor cavities 400a and the two reducer cavities 500a separately. This achieves parallel flow, reduces system resistance of oil flow in the housing 20a of the powertrain 20, and also helps improve the cooling and lubrication efficiency of the powertrain 20.

The foregoing describes in detail the powertrain and the electric vehicle provided in embodiments of this application. The principles and embodiments in this application are described in this specification by using specific examples. The descriptions about embodiments are merely provided to help understand the method in this application and core ideas of the method. In addition, a person of ordinary skill in the art can make variations and modifications in terms of the specific embodiments and application scopes based on the ideas in this application. In conclusion, the content of this specification shall not be construed as a limitation on this application.

## Claims

1. A powertrain, wherein a motor housing of the powertrain is configured to: fasten a stator of a drive motor and accommodate a rotor and a motor shaft that are of the drive motor, the rotor is fastened to the motor shaft, a reducer housing of the powertrain is configured to enclose an opening of the motor housing, and an inner cavity of the reducer housing is configured to accommodate one planetary gear set of a planetary reducer, wherein
the reducer housing comprises a through hole, the through hole is configured to connect the inner cavity of the reducer housing and an inner cavity of the motor housing, one end of the motor shaft extends into the inner cavity of the reducer housing from the through hole in an axial direction of the powertrain, and the one end of the motor shaft is configured to serve as a sun gear of the one planetary gear set.

2. The powertrain according to claim 1, wherein an outer circumferential surface of the one end of the motor shaft comprises a plurality of teeth, and the plurality of teeth are configured to: engage with and drive planet gears of the one planetary gear set.

3. The powertrain according to claim 1 or 2, wherein an outer diameter of the sun gear of the motor shaft is less than an outer diameter of a part that is of the motor shaft and that is configured to fasten the rotor.

4. The powertrain according to any one of claims 1 to 3, wherein the reducer housing further comprises a motor shaft bearing groove, the motor shaft bearing groove is configured to accommodate a bearing of the motor shaft, a groove opening of the motor shaft bearing groove faces the rotor in the axial direction of the powertrain, an end winding of the stator is located in the inner cavity of the motor housing, the end winding surrounds an outer circumference of the motor shaft bearing groove, the through hole penetrates a groove bottom of the motor shaft bearing groove in the axial direction of the powertrain, and the one end of the motor shaft penetrates the through hole from the motor shaft bearing groove, and extends into the inner cavity of the reducer housing.

5. The powertrain according to claim 4, wherein a spacing between an end part of the one end of the motor shaft and the bearing is less than a spacing between an end part of the other end of the motor shaft and the bearing.

6. The powertrain according to claim 4, wherein a groove wall of the motor shaft bearing groove is configured to fasten a bearing clamping plate, the bearing clamping plate is located between the reducer housing and the rotor in the axial direction of the powertrain, the end winding of the stator surrounds an outer circumference of the bearing clamping plate, the bearing clamping plate is configured to clamp an outer ring of the bearing, and the bearing clamping plate and an inner ring of the bearing are spaced from each other.

7. The powertrain according to any one of claims 1 to 6, wherein a part of the reducer housing is recessed toward the inner cavity of the motor housing to form a groove on a side that is of the part of the reducer housing and that is away from the drive motor, and the groove is configured to accommodate the planet gear and the sun gear of the one planetary gear set.

8. The powertrain according to any one of claims 1 to 7, wherein the one planetary gear set comprises a plurality of planet gears, the plurality of planet gears are configured to engage with the sun gear, and the plurality of planet gears are evenly distributed on a circumferential side of the one end of the motor shaft in a circumferential direction of the motor shaft.

9. The powertrain according to any one of claims 1 to 8, wherein the motor shaft comprises a motor shaft oil hole, the motor shaft oil hole is configured to communicate with an internal oil channel of the motor shaft to receive oil, the motor shaft oil hole is distributed on an outer circumferential surface of the motor shaft, and the motor shaft oil hole is exposed to the inner cavity of the reducer housing.

10. The powertrain according to claim 9, wherein a planetary shaft of the one planetary gear set comprises an axial hole and a radial hole, the axial hole is distributed on an axial end face of the planetary shaft of the one planetary gear set, the radial hole is distributed on an outer circumferential surface of the planetary shaft of the one planetary gear set, the axial hole is configured to receive oil output from the motor shaft oil hole, and the radial hole is configured to communicate with the axial hole to convey oil to a bearing between the planetary shaft and the planet gear of the one planetary gear set for lubrication.

11. The powertrain according to any one of claims 1 to 10, wherein the planetary reducer further comprises another planetary gear set, an outer circumferential surface of one end of a planet carrier of the one planetary gear set is configured to be in a transmission connection to a sun gear of the another planetary gear set, a central hole of a planet carrier of the another planetary gear set is configured to fasten a half shaft of a wheel of an electric vehicle, and an inner side of the other end of the planet carrier of the one planetary gear set is configured to accommodate the sun gear of the one planetary gear set.

12. The powertrain according to claim 11, wherein an inner wall of the reducer housing comprises an annular protrusion, the annular protrusion protrudes away from the rotor in the axial direction of the powertrain, an inner circumferential surface of the annular protrusion is configured to fasten a ring gear of the one planetary gear set, and an outer circumferential surface of the annular protrusion is configured to fasten a bearing of the planet carrier of the another planetary gear set.

13. The powertrain according to claim 11 or 12, wherein a central hole at the one end of the planet carrier of the one planetary gear set is configured to fasten one bearing of the planet carrier of the another planetary gear set, an end face of the one end of the motor shaft comprises an axial through hole, an opening of the axial through hole faces the central hole at the one end of the planet carrier of the one planetary gear set, and the axial through hole is configured to output oil in the internal oil channel of the motor shaft to the central hole.

14. The powertrain according to claim 13, wherein the planet carrier of the another planetary gear set comprises a half shaft hole and a seal, one opening of the half shaft hole extends out of the reducer housing to accommodate the half shaft of the wheel, another opening of the half shaft hole faces the central hole at the one end of the planet carrier of the one planetary gear set, one end of the seal is configured to seal the another opening of the half shaft hole, and the other end of the seal is configured to fasten the one bearing of the planet carrier of the another planetary gear set.

15. An electric vehicle, wherein the electric vehicle comprises a vehicle frame and the powertrain according to any one of claims 1 to 14, the vehicle frame is configured to fasten the powertrain, and the drive motor of the powertrain is configured to: receive power supply from a power battery and drive the wheel through the planetary reducer.
